(19) Europäisches Patentamt
European Patent Office
Office européen des brevets

(11) EP 4 714 671 A1

(12) EUROPEAN PATENT APPLICATION

(43) Date of publication:
**25.03.2026 Bulletin 2026/13**

(21) Application number: **25200104.5**

(22) Date of filing: **04.09.2025**

(51) International Patent Classification (IPC):
***B60C 1/00*** *(2006.01)* ***C08L 9/06*** *(2006.01)*

(52) Cooperative Patent Classification (CPC):
(C-Sets available)
**C08L 9/06; B60C 1/0016** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.09.2024 JP 2024163980**
**21.05.2025 JP 2025084704**

(71) Applicant: **Sumitomo Rubber Industries, Ltd.**
**Kobe-shi, Hyogo 651-0072 (JP)**

(72) Inventor: **INUKI, Yurina**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) Provided is a tire with excellent dry grip performance during cornering. The tire includes a tread, the tread including a tire rubber composition, the tire rubber composition containing a rubber component including styrene-butadiene rubber and an ionic bonding coupling agent, the tread including a first land portion closest to a tire equator among land portions present in an area on a vehicle outboard side from the equator and a second land portion disposed outwardly of the first land portion, the tire satisfying the following conditions (1) to (3):
(1) the styrene-butadiene rubber has a styrene content of higher than 20% by mass,
(2) a land ratio L1 of the first land portion and a land ratio L2 of the second land portion satisfy $L2/L1 > 0.3$, and
(3) $(L2 - L1 \times 0.3) \times$ total styrene content of the rubber component > 500.

EP 4 714 671 A1

(52) Cooperative Patent Classification (CPC): (Cont.)

C-Sets
**C08L 9/06, C08L 7/00, C08K 3/36, C08K 3/04, C08L 13/00, C08L 45/00;**
**C08L 9/06, C08L 7/00, C08K 3/36, C08K 3/04, C08L 13/00, C08L 47/00, C08L 45/00**

## Description

TECHNICAL FIELD

The present invention relates to tires.

BACKGROUND ART

Tires for automobiles are required to have good dry grip performance for safety and other reasons. Although various tires have been suggested, further improvement is desired (for example, Patent Literature 1).

CITATION LIST

PATENT LITERATURE

Patent Literature 1: JP 2008-285524 A

SUMMARY OF INVENTION

TECHNICAL PROBLEM

The present invention has been made in view of the above-described circumstances and aims to provide a tire with excellent dry grip performance during cornering.

SOLUTION TO PROBLEM

The present invention relates to a tire including a tread,

the tread including a tire rubber composition, the tire rubber composition containing a rubber component including styrene-butadiene rubber and an ionic bonding coupling agent,
the tread including a first land portion closest to a tire equator among land portions present in an area on a vehicle outboard side from the equator and a second land portion disposed outwardly of the first land portion,
the tire satisfying the following conditions (1) to (3):

(1) the styrene-butadiene rubber has a styrene content of higher than 20% by mass,
(2) a land ratio L1 of the first land portion and a land ratio L2 of the second land portion satisfy $L2/L1 > 0.3$, and
(3) $(L2 - L1 \times 0.3) \times$ total styrene content of the rubber component > 500.

ADVANTAGEOUS EFFECTS OF INVENTION

The tire of the present invention includes a tread, the tread including a tire rubber composition, the tire rubber composition containing a rubber component including styrene-butadiene rubber and an ionic bonding coupling agent, the tread including a first land portion closest to a tire equator among land portions present in an area on a vehicle outboard side from the equator and a second land portion disposed outwardly of the first land portion, the tire satisfying the conditions (1) to (3). The present invention can thus provide a tire with excellent dry grip performance during cornering.

BRIEF DESCRIPTION OF DRAWINGS

FIG. 1 is a development diagram of a tread portion according to an embodiment of the present invention.

DESCRIPTION OF EMBODIMENTS

The tire includes a tread including a tire rubber composition. The tire rubber composition contains a rubber component including styrene-butadiene rubber and an ionic bonding coupling agent. The tread includes a first land portion closest to a tire equator among land portions present in an area on a vehicle outboard side from the equator and a second land portion disposed outwardly of the first land portion. The tire satisfies the conditions (1) to (3).
The mechanism of the above-described effects is not exactly clear, but it is believed as follows.
In the tire including a tread that includes a tire rubber composition containing an ionic bonding coupling agent, the

land ratio of the shoulder portion of the tread is high, and the styrene-butadiene rubber component has a high styrene content. Thus, the tread has a large area to come in contact with the road surface, and also the energy loss due to the movement of polymer chains is increased, thereby facilitating power transfer to the road surface during cornering.

Presumably, the above-described effects significantly improve the dry grip performance during cornering.

Herein, the term "rubber component" refers to a component that contributes to crosslinking. A rubber that is solid under conditions of 1 atmosphere and 25°C (solid rubber) corresponds to "rubber component". In other words, a rubber that is liquid under conditions of 1 atmosphere and 25°C (liquid rubber) does not correspond to "rubber component".

Here, the rubber component is preferably a polymer having a weight average molecular weight (Mw) of 100000 or more.

The weight average molecular weight of each rubber component is preferably 100000 or more, more preferably 150000 or more, still more preferably 200000 or more, while it is preferably 2000000 or less, more preferably 1500000 or less, still more preferably 1000000 or less. When the weight average molecular weight is within the range indicated above, the advantageous effects tend to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The total styrene content of the rubber component is preferably 1% by mass or more, more preferably 5% by mass or more, still more preferably 10% by mass or more, while it is preferably 30% by mass or less, more preferably 20% by mass or less, still more preferably 15% by mass or less. When the total styrene content is within the range indicated above, the advantageous effects tend to be better achieved.

To improve grip performance, the total styrene content is preferably 13.75% by mass or more, more preferably 19.75% by mass or more, still more preferably 23.7% by mass or more. To improve fuel economy, the total styrene content is preferably 23.7% by mass or less, more preferably 19.75% by mass or less, still more preferably 13.75% by mass or less.

Here, the total styrene content of the rubber component refers to the total amount (unit: % by mass) of the styrene moieties in the rubber component as a whole and can be calculated by Σ[(Amount of each rubber component) × (Styrene content of the each rubber component)/100]. For example, when 100% by mass of rubber components include 85% by mass of styrene-butadiene rubber having a styrene content of 40% by mass, 5% by mass of styrene-butadiene rubber having a styrene content of 25% by mass, and 10% by mass of polybutadiene rubber having a styrene content of 0% by mass, the total styrene content is 35.25% by mass (= 85 × 40/100 + 5 × 25/100 + 10 × 0/100).

Herein, the styrene content of each rubber component can be determined by pyrolysis gas chromatography or NMR analysis ($^{1}$H-NMR or $^{13}$C-NMR). This also applies to the styrene content of the SBR and the vinyl content of the SBR described below. Unlike physical properties such as complex modulus of elasticity (E*), the amounts of components have true values that do not depend on the measurement method and therefore they are preferably measured by methods with the highest possible accuracy.

Herein, in Examples, the total styrene content or the like of the rubber component is calculated using an expression described herein. Yet, the total styrene content may be determined by analyzing the tire using Py-GC/MS or other techniques.

The rubber component includes styrene-butadiene rubber (SBR).

The SBR is not limited. Examples of the SBR include emulsion-polymerized styrene-butadiene rubbers (E-SBR) and solution-polymerized styrene-butadiene rubbers (S-SBR). Each of these may be used alone, or two or more of these may be used in combination.

The SBR has a glass transition temperature (Tg) of preferably -10°C or lower, more preferably -20°C or lower, still more preferably -23°C or lower, further preferably -25°C or lower. The lower limit of the Tg of the SBR is not limited and it is preferably -75°C or higher, more preferably -70°C or higher, still more preferably -65°C or higher, further preferably -60°C or higher. When the Tg is within the range indicated above, the advantageous effects tend to be better achieved.

Herein, the glass transition temperature is measured by differential scanning calorimetry (DSC) at a temperature increase rate of 10°C/min in accordance with JIS K 7121. When multiple types of SBR are used, the glass transition temperature of the SBR refers to a weight average value calculated from the grass transition temperatures and the proportions of the multiple types of SBR. For example, when 100 parts by mass of the rubber component includes 40% by mass of SBR having a Tg of -80°C and 40% by mass of SBR having a Tg of -40°C, the glass transition temperature of the SBR in the rubber composition is -60°C (= ((-80 × 40) + (-40 × 40))/(40 + 40)).

The styrene content of the SBR in the rubber composition is higher than 20% by mass.

The styrene content of the SBR is preferably 23% by mass or higher, more preferably 25% by mass or higher, still more preferably 27% by mass or higher, while it is preferably 50% by mass or lower, more preferably 40% by mass or lower, still more preferably 30% by mass or lower. When the styrene content is within the range indicated above, the advantageous effects tend to be better achieved.

To improve grip performance, the styrene content is preferably 27.5% by mass or higher, more preferably 39.5%

by mass or higher. To improve fuel economy, the styrene content is preferably 39.5% by mass or lower, more preferably 27.5% by mass or lower.

When one type of SBR is used, the styrene content of the SBR refers to the styrene content of the one SBR, while when multiple types of SBR are used, it refers to the average styrene content.

The average styrene content of SBR can be calculated using the expression: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)).

The vinyl content of the SBR is preferably 30% by mass or higher, more preferably 45% by mass or higher, still more preferably 55% by mass or higher, while it is preferably 80% by mass or lower, more preferably 70% by mass or lower, still more preferably 60% by mass or lower. When the vinyl content is within the range indicated above, the advantageous effects tend to be better achieved.

To improve grip performance, the vinyl content is preferably 38.5% by mass or higher, more preferably 57% by mass or higher. To improve fuel economy, the vinyl content is preferably 57% by mass or lower, more preferably 38.5% by mass or lower.

The vinyl content (1,2-butadiene unit content) of the SBR refers to the percentage (unit: % by mass) of vinyl bonds based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of SBR can be calculated using the expression: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of rubber components other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

Hydrogenated styrene-butadiene copolymers (hydrogenated SBR) are also usable as the SBR.

The SBR may be a SBR product manufactured or sold by Sumitomo Chemical Co., Ltd., JSR Corporation, Asahi Kasei Corporation, Zeon Corporation, or other manufacturers or may be SBR synthesized by a known method.

The rubber component preferably includes an isoprene-based rubber.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

The rubber component preferably includes polybutadiene rubber (BR).

Non-limiting examples of the BR include high-cis BR having a high cis content, BR containing syndiotactic polybutadiene crystals, and BR synthesized using rare earth catalysts (rare earth-catalyzed BR). Each of these may be used alone, or two or more of these may be used in combination. In particular, BR preferably includes high-cis BR having a cis content of 90% by mass or higher. The cis content is more preferably 95% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of BR can be calculated using the expression: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

Hydrogenated polybutadiene polymers (hydrogenated BR) are also usable as the BR.

Examples of usable BR include products available from UBE Corporation, JSR Corporation, Asahi Kasei Corp., Zeon Corporation, and other manufacturers.

The raw materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene derived from recycled materials, butadiene derived from recycled materials, and aromatic vinyls derived from recycled

materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and/or styrene derived from recycled materials (recycled styrene) are/is preferably used as raw materials.

The recycled monomers may be produced by any method. For example, a recycled monomer may be synthesized from naphtha derived from a recycled material that is obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the raw materials (monomers) of synthetic rubbers such as IR, SBR, and BR may be derived from biomass. Herein, the term "biomass" refers to substances derived from natural resources such as plants. Non-limiting examples of the biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Non-limiting examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or biomass-derived aromatic vinyl. Examples of the aromatic vinyl-butadiene copolymers include styrene-butadiene rubber synthesized using biomass-derived butadiene and/or biomass-derived styrene.

Whether the raw material of a polymer is derived from biomass can be judged by the percent Modern Carbon (pMC) measured in accordance with ASTM D6866-10.

The term "pMC" refers to the ratio of the $^{14}C$ content of a sample to the $^{14}C$ content of a modern carbon standard (modern standard reference). This value is used as an index indicative of the biomass ratio of a compound. The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to be left for at least 226000 years after carbon dioxide and the like in the air were taken into and fixed in plants, or the like, all the $^{14}C$ atoms which had been contained in the plants or the like at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are circulating in the current environment is about $1 \times 10^{-12}$ mol% of the total of C atoms as described above. Therefore, a difference in the values can be used to calculate the biomass ratio of a compound.

The amount of $^{14}C$ is generally determined as follows. $^{13}C$ content ($^{13}C/^{12}C$) and $^{14}C$ content ($^{14}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber 100% produced from materials derived from biomass currently often fails to exhibit a value of 100 in a usual state and is thus expected to show roughly about 110 pMC, though there are some differences such as regional differences. On the other hand, the measured $^{14}C$ content of a chemical substance derived from a fossil fuel, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

The amount of the SBR based on 100% by mass of the rubber component in the tire rubber composition is preferably 30% by mass or more, more preferably 40% by mass or more, still more preferably 50% by mass or more, while it is preferably 80% by mass or less, more preferably 70% by mass or less, still more preferably 60% by mass or less. When the amount is within the range indicated above, the advantageous effects tend to be better achieved.

To improve grip performance, the amount is preferably 50% by mass or more, more preferably 60% by mass or more. To improve fuel economy, the amount is preferably 60% by mass or less, more preferably 50% by mass or less.

The amount of the isoprene-based rubber based on 100% by mass of the rubber component in the tire rubber composition is preferably 10% by mass or more, more preferably 20% by mass or more, still more preferably 30% by mass or more, while it is preferably 60% by mass or less, more preferably 50% by mass or less, still more preferably 40% by mass or less. When the amount is within the range indicated above, the advantageous effects tend to be better achieved.

To improve abrasion resistance, the amount is preferably 30% by mass or more, more preferably 40% by mass or more. To improve handling stability during high-speed driving, the amount is preferably 40% by mass or less, more preferably 30% by mass or less.

The amount of the BR based on 100% by mass of the rubber component in the tire rubber composition is preferably 5% by mass or more, more preferably 15% by mass or more, still more preferably 20% by mass or more, while it is preferably 40% by mass or less, more preferably 30% by mass or less, still more preferably 25% by mass or less. When the amount is within the range indicated above, the advantageous effects tend to be better achieved.

To improve grip performance, the amount is preferably 20% by mass or less, more preferably 10% by mass or less.

The tire rubber composition may contain, as rubber components, different rubber components other than SBR, isoprene-based rubbers, and BR. Examples of usable different rubber components include diene-based rubbers other than the above-described rubbers. Examples of the diene-based rubbers other than isoprene-based rubbers, BR, and SBR include styrene-isoprene-butadiene rubber (SIBR), ethylenepropylene-diene rubber (EPDM), chloroprene rubber (CR), and acrylonitrile-butadiene rubber (NBR). Examples also include butyl-based rubbers and fluororubbers. Each of these rubber components may be used alone, or two or more of these may be used in combination. Modified or hydrogenated products of these rubber components are also usable. Rubbers extended with oils, resins, liquid rubber components, or the like are usable as well.

The tire rubber composition contains an ionic bonding coupling agent.

The ionic bonding coupling agent may be any material that reacts with silica to modify the silica such that ionic bonds can be formed. Specifically, the ionic bonding coupling agent may be any material that includes a portion capable of reacting with silica and a portion capable of forming ionic bonds. The ionic bonding coupling agent is preferably, for example, a compound that includes a portion represented by $SiOR^1$ (wherein $R^1$ represents a monovalent organic group), which is a portion capable of reacting with a silanol group on the surface of silica, and an ionic functional group. The ionic functional group may be any functional group containing anionic species or cationic species.

Examples include anionic groups such as a sulfate ester group ($-OSO_3^-X^+$), a sulfonate group ($-SO_3^-X^+$), a phosphate ester group ($-OPO(O^-X^+)_2$), a phosphonate group ($-PO(O^-X^+)_2$), a carboxylate group ($-COO^-X^+$), and a boronate group ($-B(O^-X^+)_2$), wherein $X^+$ represents a cation; and cationic groups such as a quaternary ammonium group ($-(NR^{35}R^{36}R^{37})^+Y^-$1 wherein $R^{35}$ to $R^{37}$ are described later, and $Y^-$ represents an anion. The ionic bonding coupling agent may have one type or two or more types of the ionic functional groups. The cation represented by $X^+$ may be an organic ion or an inorganic ion. Non-limiting examples of the cation include a metal ion such as a lithium ion, a sodium ion, or a potassium ion, and an ammonium group. The anion represented by $Y^-$ may be an organic ion or an inorganic ion. Non-limiting examples of the anion include a chloride ion described later.

Of these, the ionic bonding coupling agent preferably includes at least one selected from the group consisting of a compound represented by the following formula (1), a hydrolysate of a compound represented by the following formula (1), and a hydrolysis condensate of a compound represented by the following formula (1).

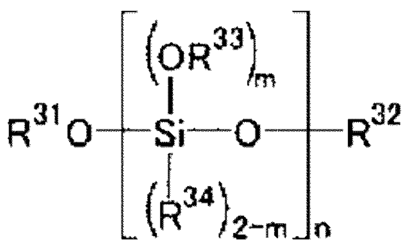

(1)

In the formula (1), $R^{31}$ and $R^{32}$ each independently represent a monovalent organic group; $R^{33}$ and $R^{34}$ each independently represent an organic group having a group selected from the group consisting of an alkyl group, a vinyl group, an epoxy group, a styryl group, a (meth)acryl group, an amino group, an isocyanurate group, an ureido group, a

mercapto group, a sulfide group, a polyalkylene oxyalkyl group, a carboxyl group, a sulfate ester group, a sulfonate group, a phosphate ester group, a phosphonate group, a carboxylate group, a boronate group, and a quaternary ammonium group; at least one $R^{34}$ is an organic group having a group selected from the group consisting of a sulfate ester group, a sulfonate group, a phosphate ester group, a phosphonate group, a carboxylate group, a boronate group, and a quaternary ammonium group; each m independently represents an integer of 0 to 2; and n represents an integer.

Herein, the term "organic group" refers to a group having one or more carbon atoms.

The hydrolysate of a compound represented by the formula (1) refers to a compound obtained by converting at least one substituent on a silicon atom in the compound represented by the formula (1) into a silanol group through hydrolysis.

The hydrolysis condensate of a compound represented by the formula (1) refers to a compound obtained through condensation of at least two compounds selected from the group consisting of compounds represented by the formula (1) and hydrolysates of compounds represented by the formula (1).

In the formula (1), m is preferably 1 or 2, more preferably 2.

In the formula (1), n is preferably an integer of 2 to 20.

The number of carbon atoms of the monovalent organic group as $R^{31}$ or $R^{32}$ in the formula (1) is preferably 1 to 6.

The C1-C6 organic group as $R^{31}$ or $R^{32}$ may be linear or may include a branch or a ring structure. Examples of the C1-C6 organic group include an alkyl group and an alkenyl group, with an alkyl group being preferred. Examples of the C1-C6 alkyl group include a methyl group, an ethyl group, a propyl group, an isopropyl group, an n-butyl group, a tert-butyl group, an n-pentyl group, an n-hexyl group, and a cyclohexyl group.

$R^{31}$ and $R^{32}$ in the formula (1) preferably each independently represent a C1-C6 alkyl group, more preferably a C1-C4 alky group, still more preferably a methyl group or an ethyl group, particularly preferably a methyl group.

Each $R_3^3$ in the formula (1) preferably independently represents a C1-C6 alkyl group, more preferably a C1-C4 alky group, still more preferably a methyl group or an ethyl group, particularly preferably a methyl group.

At least one $R^{34}$ in the formula (1) is preferably an organic group having a quaternary ammonium group.

Examples of the group having a quaternary ammonium group include groups represented by the following formula:

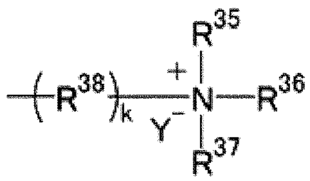

wherein $R^{15}$ to $R^{37}$ each independently represent a monovalent organic group; each $R^{38}$ independently represents a divalent organic group; $Y^-$ represents an anion; and k represents an integer.

Examples of the monovalent organic group as any of $R^{15}$ to $R^{37}$ include a monovalent hydrocarbon group. Examples of the monovalent hydrocarbon group include a C1-C18 alkyl group and a C2-C12 alkenyl group.

The number of carbon atoms of any of $R^{35}$ to $R^{37}$ is preferably 1 to 12, more preferably 1 to 7, still more preferably 1 to 5, particularly preferably 1 to 3.

The monovalent organic group as any of $R^{35}$ to $R^{37}$ is particularly preferably a methyl group or an ethyl group.

Examples of the divalent organic group as $R^{38}$ include a divalent hydrocarbon group. Examples of the divalent hydrocarbon group include a C1-C12 alkylene group and a C2-C12 alkenylene group.

The number of carbon atoms of $R^{38}$ is preferably 1 to 12, more preferably 1 to 7, still more preferably 1 to 5, particularly preferably 1 to 3.

The divalent organic group as $R^{38}$ is particularly preferably a methylene group or an ethylene group.

Preferably, k is 0 to 5, more preferably 0 to 3, still more preferably 0 or 1, particularly preferably 0.

Non-limiting examples of $Y^-$ include halide ions (e.g., chloride ion, bromide ion, iodide ion); carboxylate ions (e.g., formate ion, acetate ion, trifluoroacetate ion, lactate ion, propionate ion, benzoate ion, oxalate ion, succinate ion, stearate ion); methyl sulfate ions (e.g., alkyl sulfate ion); sulfonate ions (e.g., methanesulfonate ion, benzenesulfonate ion, trifluoromethanesulfonate ion, toluenesulfonate ion, naphthalenesulfonate ion, nitrobenzenesulfonate ion, dodecylbenzenesulfonate ion, ethanesulfonate ion); sulfonimide ions (e.g., bis(trifluoromethanesulfonate) imide ion); borate ions (e.g., tetrafluoroborate ion, tetraphenylborate ion, butyltriphenylborate ion); phosphate ions (e.g., hexafluorophosphate ion); antimonate ions (e.g., hexafluoroantimonate ion); arsenate ions (e.g., hexafluoroarsenate ion); perhalate ions (e.g., perchlorate ion, periodate ion); thiocyanate ions, and nitrate ions.

To better achieve the advantageous effects, a compound represented by the following formula (1-1) is desirable among the compound represented by the formula (1), the hydrolysate of a compound represented by the formula (1), and the hydrolysis condensate of a compound represented by the formula (1).

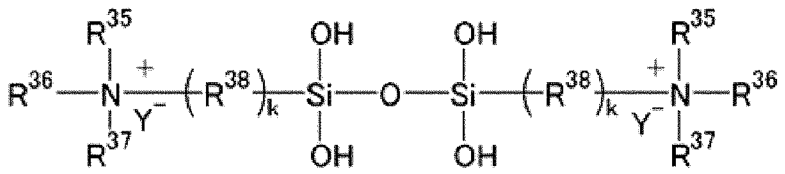

(1-1)

In the formula (1-1), $R^{35}$ to $R^{37}$ each independently represent the group described above for the $R^{35}$ to $R^{37}$; each $R^{38}$ independently represents the group described above for the $R^{38}$; each $Y^-$ independently represents the anion described above for the $Y^-$; and each k independently represents the integer described above for the k.

In the formula (1-1), preferred examples of $R^{35}$ to $R^{37}$, $R^{38}$, $Y^-$, and k are also as described above.

When the ionic bonding coupling agent has a structure of a salt (e.g., a quaternary ammonium salt), such as a compound represented by the formula (1-1), the advantageous effects tend to be better achieved. The compound represented by the formula (1) preferably has a quaternary ammonium salt structure. The ionic bonding coupling agent is more preferably a quaternary ammonium salt.

The ionic bonding coupling agent may be a commercial product such as X-12-1126 or KBM-9418-40 available from Shin-Etsu Chemical Co., Ltd.

The total amount of the ionic bonding coupling agent per 100 parts by mass of the rubber component in the tire rubber composition is preferably 3 parts by mass or more, more preferably 5 parts by mass or more, still more preferably 7 parts by mass or more, while it is preferably 20 parts by mass or less, more preferably 15 parts by mass or less, still more preferably 10 parts by mass or less. When the total amount is within the range indicated above, the advantageous effects tend to be better achieved.

To improve overall performance in terms of wet grip performance and dry grip performance, the total amount is preferably 6 parts by mass or more, more preferably 7 parts by mass or more. To improve fuel economy, the total amount is preferably 7 parts by mass or less, more preferably 6 parts by mass or less.

The tire rubber composition may contain a filler.

The filler is not limited and may be a known material in the rubber field. Examples include an inorganic filler such as carbon black, silica, calcium carbonate, talc, alumina, clay, magnesium sulfate, aluminum hydroxide, aluminum oxide, or mica; bio char; and a hard-to-disperse filler. To better achieve the advantageous effects, carbon black and silica are preferred, with silica being more preferred among these.

Non-limiting examples of silica usable in the tire rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks as a raw material). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product including an electronic component such as a semiconductor, a tire, a drying agent, or a filtering material such as diatomite. Non-limiting examples of the recovering method include thermal decomposition and decomposition by electromagnetic waves. Preferred among these is silica recovered from an electronic component such as a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, for example).

Amorphous silica extracted from husks may be commercially available from Wilmar and other manufacturers.

The cetyltrimethylammonium bromide adsorption specific surface area (CTAB specific surface area, CTAB) of the silica is preferably 100 $m^2/g$ or more, more preferably 160 $m^2/g$ or more, still more preferably 170 $m^2/g$ or more, further preferably 200 $m^2/g$ or more, further preferably 220 $m^2/g$ or more. The upper limit of the CTAB of the silica is not limited and is preferably 350 $m^2/g$ or less, more preferably 300 $m^2/g$ or less, still more preferably 260 $m^2/g$ or less, further preferably 245 $m^2/g$ or less. When the CTAB specific surface area is within the range indicated above, the advantageous effects are better achieved, though the mechanism thereof is not clear. Presumably, the conformity to the road surface is increased, thereby improving dry grip performance during cornering.

Herein, the CTAB specific surface area of the silica is measured in accordance with JIS K 6217-3.

The average particle size of the silica is preferably 24 nm or less, more preferably 22 nm or less, still more

preferably 20 nm or less, further preferably 17 nm or less, while it is preferably 6 nm or more, more preferably 9 nm or more, still more preferably 12 nm or more. When the average particle size is within the range indicated above, the advantageous effects tend to be better achieved.

Herein, the average particle size of the silica is determined by transmission electron microscopy (TEM). Specifically, silica particles are photographed using a transmission electron microscope to measure the particle sizes. The particle size of a particle having a spherical shape is the spherical diameter thereof; the particle size of a particle having an acicular or rod shape is the minor axis thereof; and the particle size of a particle having an amorphous shape is an average of the particle sizes measured at the central portion. Then, the average of the particle sizes of 100 fine particles is defined as the average particle size.

Non-limiting examples of the carbon black include N134, N110, N220, N234, N219, N339, N330, N326, N351, N550, and N762. The raw material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by thermal black method. Usable commercial products may be available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, and other manufacturers. Each of these carbon black may be used alone, or two or more of these may be used in combination.

The CTAB specific surface area of the carbon black is preferably 50 $m^2/g$ or more, more preferably 80 $m^2/g$ or more, still more preferably 110 $m^2/g$ or more. The CTAB specific surface area is preferably 200 $m^2/g$ or less, more preferably 180 $m^2/g$ or less, still more preferably 160 $m^2/g$ or less. When the CTAB specific surface area is within the range indicated above, the advantageous effects tend to be better achieved.

Herein, the CTAB specific surface area of the carbon black is measured in accordance with JIS K 6217-3.

The magnesium sulfate is preferably an anhydrous magnesium sulfate, a magnesium sulfate dihydrate, or a magnesium sulfate trihydrate, with an anhydrous magnesium sulfate being more preferred.

Examples of the hard-to-disperse filler include short fibers and gel-like compounds. Short fibers are preferred among these.

Examples of usable short fibers include organic short fibers and inorganic short fibers. Specific examples of the organic short fibers include nanocellulose such as cellulose nanofibers (CNF) and cellulose nanocrystals (CNC); chitin nanofibers; and biomass nanomaterials such as chitosan nanofibers. Specific examples of the inorganic short fibers include metal fibers and glass fibers. Usable commercial short fibers may be available from Nippon Paper Industries Co., Ltd., Sugino Machine Limited, and other manufacturers. Each of these may be used alone, or a mixture of two or more of these may be used. Organic short fibers are preferred, and nanocellulose is more preferred among these.

The particle size of the nanocellulose is preferably 10 nm or more, more preferably 20 nm or more, still more preferably 25 nm or more, particularly preferably 28 nm or more, while it is preferably 50 nm or less, more preferably 40 nm or less, still more preferably 35 nm or less, particularly preferably 32 nm or less. When the particle size is within the range indicated above, the advantageous effects tend to be better achieved.

Herein, the particle size of the nanocellulose refers to an average fiber diameter measured by image analysis using scanning electron micrographs, image analysis using transmission electron micrographs, image analysis using atomic force micrographs, X-ray scattering data analysis, the aperture impedance method (Coulter principle), or other methods. Herein, the average fiber diameter of the nanocellulose (cellulose fibers) typically refers to the average fiber diameter of the aggregates of the cellulose fibers formed by aggregation of cellulose molecules.

The amount of the filler (total amount of fillers such as silica and carbon black) per 100 parts by mass of the rubber component in the tire rubber composition is preferably 65 parts by mass or more, more preferably 95 parts by mass or more, still more preferably 125 parts by mass or more, while it is preferably 180 parts by mass or less, more preferably 160 parts by mass or less, still more preferably 140 parts by mass or less. When the amount is within the range indicated above, the advantageous effects tend to be better achieved.

To improve abrasion resistance, the amount is preferably 85 parts by mass or more, more preferably 95 parts by mass or more, still more preferably 125 parts by mass or more, further preferably 130 parts by mass or more, further preferably 145 parts by mass or more. To improve fuel economy, the amount is preferably 145 parts by mass or less, more preferably 130 parts by mass or less, still more preferably 125 parts by mass or less, further preferably 95 parts by mass or less, further preferably 85 parts by mass or less.

The amount of silica in the tire rubber composition is preferably 70 parts by mass or more, more preferably 90 parts by mass or more, still more preferably 100 parts by mass or more, further preferably 110 parts by mass or more, while it is preferably 160 parts by mass or less, more preferably 140 parts by mass or less, still more preferably 120 parts by mass or less. When the amount is within the range indicated above, the advantageous effects tend to be better achieved.

To improve wet grip performance, the amount is preferably 80 parts by mass or more, more preferably 110 parts by mass or more, still more preferably 120 parts by mass or more, further preferably 130 parts by mass or more. To improve fuel economy, the amount is preferably 130 parts by mass or less, more preferably 120 parts by mass or less, still more

preferably 110 parts by mass or less, further preferably 80 parts by mass or less.

The rubber composition preferably satisfies the condition: amount of silica/total styrene content of the rubber component > 5.

In this case, the value on the left hand side is preferably 6.0 or more, more preferably 7.0 or more, still more preferably 8.0 or more, while it is preferably 16 or less, more preferably 13 or less, still more preferably 10 or less, further preferably 9.5 or less. When the value is within the range indicated above, the advantageous effects tend to be better achieved.

In this relationship, the amount of silica refers to the amount (unit: parts by mass) per 100 parts by mass of the rubber component, and the total styrene content refers to the amount (unit: % by mass) based on 100% by mass of the rubber component.

The amount of carbon black, if present, in the tire rubber composition is preferably 1 part by mass or more, more preferably 3 parts by mass or more, still more preferably 5 parts by mass or more, while it is preferably 20 parts by mass or less, more preferably 15 parts by mass or less, still more preferably 10 parts by mass or less. When the amount is within the range indicated above, the advantageous effects tend to be better achieved.

The amount of magnesium sulfate, if present, in the tire rubber composition is preferably 1 part by mass or more, more preferably 5 parts by mass or more, still more preferably 10 parts by mass or more, while it is preferably 40 parts by mass or less, more preferably 30 parts by mass or less, still more preferably 20 parts by mass or less. When the amount is within the range indicated above, the advantageous effects tend to be better achieved.

The amount of a hard-to-disperse filler, if present, in the tire rubber composition per 100 parts by mass of the rubber component is preferably 1 part by mass or more, more preferably 5 parts by mass or more. The amount is preferably 50 parts by mass or less, more preferably 30 parts by mass or less. When the amount is within the range indicated above, the advantageous effects tend to be better achieved.

The tire rubber composition which contains silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Mercapto silane coupling agents are preferred among these.

Examples of usable commercial products include products available from Degussa, Momentive, Shin-Etsu Chemical Co., Ltd., Tokyo Chemical Industry Co., Ltd., AZmax. Co., Dow Corning Toray Co., Ltd., and other manufacturers. Each of these may be used alone, or two or more of these may be used in combination.

The mercapto silane coupling agent may be a compound having a mercapto group protected by a protecting group, such as a compound represented by the following formula (S1), as well as a compound having a mercapto group.

Examples of particularly suitable mercapto silane coupling agents include a silane coupling agent represented by the following formula (S1) and a silane coupling agent that contains a linking unit A represented by the following formula (I) and a linking unit B represented by the following formula (II).

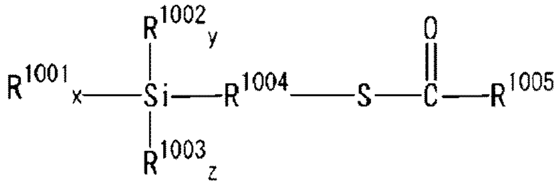

(S1)

In the formula (S1), $R^{1001}$ represents a monovalent group selected from -Cl, - Br, $-OR^{1006}$, $-O(O=)CR^{1006}$, $-ON=CR^{1006}R^{1007}$, $-NR^{1006}R^{1007}$, or - $(OSiR^{1006}R^{1007})_h(OSiR^{1006}R^{1007}R^{1008})$ where $R^{1006}$, $R^{1007}$, and $R^{1008}$ may be the same as or different from each other and each represent a hydrogen atom or a C1-C18 monovalent hydrocarbon group, and h represents an average number of 1 to 4; $R^{1002}$ represents $R^{1001}$, a hydrogen atom, or a C1-C18 monovalent hydrocarbon group; $R^{1003}$ represents a $-[O(R^{1009}O)_j]-$ group where $R^{1009}$ represents a C1-C18 alkylene group, and j represents an integer of 1 to 4; $R^{1004}$ represents a C1-C18 divalent hydrocarbon group; $R^{1005}$ represents a C1-C18

monovalent hydrocarbon group; and x, y, and z are numbers satisfying the following relationships: $x + y + 2z = 3$, $0 \leq x \leq 3$, $0 \leq y \leq 2$, and $0 \leq z \leq 1$.

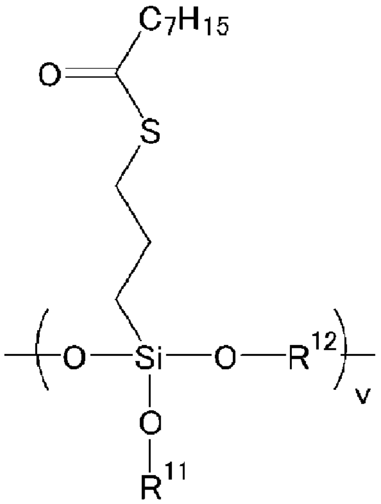

(I)

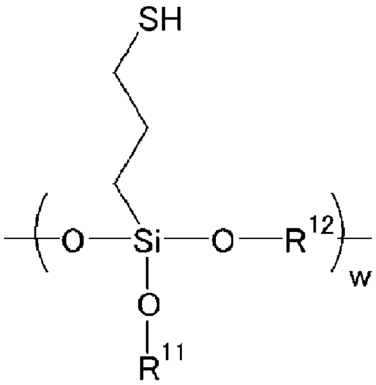

(II)

In the formulas (I) and (II), v represents an integer of 0 or more; w represents an integer of 1 or more; $R^{11}$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxy or carboxyl group; $R^{12}$ represents a branched or unbranched C1-C30 alkylene group, a branched or unbranched C2-C30 alkenylene group, or a branched or unbranched C2-C30 alkynylene group; and $R^{11}$ and $R^{12}$ may together form a cyclic structure.

Preferably, $R^{1005}$, $R^{1006}$, $R^{1007}$, and $R^{1008}$ in the formula (S1) each independently represent a group selected from the group consisting of a C1-C18 alkyl group, a C1-C18 alkenyl group, a C1-C18 aryl group, and a C1-C18 aralkyl group, which may be linear, cyclic, or branched. When $R^{1002}$ is a C1-C18 monovalent hydrocarbon group, it is preferably a group selected from the group consisting of an alkyl group, an alkenyl group, an aryl group, and an aralkyl group, which may be linear, cyclic, or branched. $R^{1009}$ is preferably a linear, cyclic, or branched alkylene group, particularly preferably a linear alkylene group. Examples of $R^{1004}$ include a C1-C18 alkylene group, a C2-C18 alkenylene group, a C5-C18 cycloalkylene group, a C6-C18 cycloalkylalkylene group, a C6-C18 arylene group, and a C7-C18 aralkylene group. The alkylene group or the alkenylene group may be either linear or branched. The cycloalkylene group, the cycloalkylalkylene group, the arylene group, or the aralkylene group may have a functional group such as a lower alkyl group on the ring. $R^{1004}$ is preferably a C1-C6 alkylene group, particularly preferably a linear alkylene group such as a methylene group, an ethylene group, a trimethylene group, a tetramethylene group, a pentamethylene group, or a hexamethylene group.

Specific examples of $R^{1002}$ $R^{1005}$, $R^{1006}$, $R^{1007}$, or $R^{1008}$ in the formula (S1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of a linear alkylene group that may be used as $R^{1009}$ in the formula (S1) include a methylene group, an

ethylene group, an n-propylene group, an n-butylene group, and a hexylene group. Examples of a branched alkylene group that may be used as $R^{1009}$ include an isopropylene group, an isobutylene group, and a 2-methylpropylene group.

Specific examples of the silane coupling agent represented by the formula (S1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Each of these may be used alone, or two or more of these may be used in combination. Particularly preferred among these is 3-octanoylthiopropyltriethoxysilane.

The linking unit A content of the silane coupling agent containing a linking unit A represented by the formula (I) and a linking unit B represented by the formula (II) is preferably 30 mol% or higher, more preferably 50 mol% or higher, while it is preferably 99 mol% or lower, more preferably 90 mol% or lower. The linking unit B content is preferably 1 mol% or higher, more preferably 5 mol% or higher, still more preferably 10 mol% or higher, while it is preferably 70 mol% or lower, more preferably 65 mol% or lower, still more preferably 55 mol% or lower. The total content of the linking units A and B is preferably 95 mol% or higher, more preferably 98 mol% or higher, particularly preferably 100 mol%.

The linking unit A content or the linking unit B content refers to the amount including the linking unit A or B present at the chain end of the silane coupling agent, if any. In the case where the linking unit A or the linking unit B is present at the chain end of the silane coupling agent, it may be in any configuration that forms a unit corresponding to the formula (I) or (II) representing the linking unit A or B.

With regard to $R^{11}$ in the formulas (I) and (II), examples of the halogen atom include chlorine, bromine, and fluorine; examples of the branched or unbranched C1-C30 alkyl group include a methyl group and an ethyl group; examples of the branched or unbranched C2-C30 alkenyl group include a vinyl group and a 1-propenyl group; and examples of the branched or unbranched C2-C30 alkynyl group include an ethynyl group and a propynyl group.

With regard to $R^{12}$ in the formulas (I) and (II), examples of the branched or unbranched C1-C30 alkylene group include an ethylene group and a propylene group; examples of the branched or unbranched C2-C30 alkenylene group include a vinylene group and a 1-propenylene group; and examples of the branched or unbranched C2-C30 alkynylene group include an ethynylene group and a propynylene group.

In the silane coupling agent containing a linking unit A represented by the formula (I) and a linking unit B represented by the formula (II), the total number of repetitions (v + w) as the sum of the number of repetitions (v) of the linking unit A and the number of repetitions (w) of the linking unit B is preferably in the range of 3 to 300.

The amount of the silane coupling agent per 100 parts by mass of silica in the tire rubber composition is preferably 2 part by mass or more, more preferably 4 parts by mass or more, still more preferably 6 parts by mass or more, while it is preferably 20 parts by mass or less, more preferably 15 parts by mass or less, still more preferably 10 parts by mass or less. When the amount is within the range indicated above, the advantageous effects tend to be better achieved.

The tire rubber composition preferably contains a resin as a plasticizer.

The term "resin" refers to a material that imparts plasticity to rubber components and conceptually includes both resins that are liquid under conditions of 1 atmosphere and 25°C and resins that are solid under conditions of 1 atmosphere and 25°C.

A resin may be used alone, or two or more resins may be used in combination.

Herein, resin and rubber (rubber components or liquid rubbers) are different materials.

The resin is not limited. Resins usually used in the tire industry are usable. Examples include viscous resins such as C5 resins, C9 resins, C5C9 resins, aromatic vinyl resins, dicyclopentadiene resins, coumarone resins, indene resins, terpene resins, rosin resins, and phenolic resins. Each of these resins may be used alone, or two or more of these may be used in combination.

Of these resins, at least one selected from the group consisting of a dicyclopentadiene resin, an aromatic vinyl resin, and a terpene resin is preferred because such a resin tends to enhance the advantageous effects.

The term "C5 resins" refers to resins obtained by polymerizing C5 fractions, and may include hydrogenated or modified products thereof. Examples of the C5 fractions include C4-C5 petroleum fractions, such as cyclopentadiene, isoprene, pentane, isopentane, neopentane, pentene, and pentadiene. Each of these C5 resins may be used alone, or two or more of these may be used in combination.

The term "C9 resins" refers to resins obtained by polymerizing C9 fractions, and may include polymers obtained by polymerizing C9 fractions alone and copolymers obtained by copolymerizing C9 fractions and other components. Hydrogenated or modified products of such resins are also usable. Examples of the C9 fractions include C8-C10 petroleum fractions, such as vinyl toluene, alkyl styrene, coumarone, indene, methylindene, and dicyclopentadiene. Each of these C9 resins may be used alone, or two or more of these may be used in combination.

The term "C5C9 resins" refers to resins obtained by copolymerizing the C5 fractions and the C9 fractions, and may include hydrogenated or modified products thereof. Examples of the C5C9 petroleum resins include commercial

products available from Tosoh Corporation, LUHUA, and other manufacturers. Each of these C5C9 resins may be used alone, or two or more of these may be used in combination.

The term "aromatic vinyl resins" refers to resins that contain an aromatic vinyl compound, such as styrene, α-methylstyrene, vinyl toluene, or p-chlorostyrene, as a monomer component with the highest content, and may include hydrogenated or modified products thereof. Preferred among aromatic vinyl resins are α-methylstyrene, styrene homopolymers, or copolymers of α-methylstyrene and styrene, with copolymers of α-methylstyrene and styrene being more preferred, because they are economical, easy to process, and excellent in heat generation properties. Examples of the aromatic vinyl resins include commercial products available from Kraton Corporation, Eastman Chemical Company, Mitsui Chemicals, Inc., and other manufacturers. Each of these aromatic vinyl resins may be used alone, or two or more of these may be used in combination.

The term "dicyclopentadiene resins" refers to resins that contain cyclopentadiene (CPD) or dicyclopentadiene (DCPD) as a monomer component, and may include hydrogenated or modified products thereof. Examples of the dicyclopentadiene resins include DCPD/C9 resins that contain dicyclopentadiene and C9 fractions as monomer components (the DCPD/C9 resins may include hydrogenated or modified products thereof). Preferred among these are DCPD/C9 resins that contain dicyclopentadiene and styrene as monomer components, and particularly preferred are DCPD/C9 resins that contain dicyclopentadiene, styrene, and indene as monomer components. Usable dicyclopentadiene resins also include commercial products available from ExxonMobil, ENEOS Corporation, Zeon Corporation, Maruzen Petrochemical Co., Ltd., and other manufacturers. Each of these dicyclopentadiene resins may be used alone, or two or more of these may be used in combination.

The term "coumarone resins" refers to resins that contain coumarone as a monomer component, and may include hydrogenated or modified products thereof. Examples of the coumarone resins include coumarone-indene resins that contain coumarone and indene as monomer components and coumarone-indene-styrene resins that contain coumarone, indene, and styrene as monomer components. Each of these coumarone resins may be used alone, or two or more of these may be used in combination.

The term "indene resins" refers to resins that contain indene as a monomer component, and may include hydrogenated or modified products thereof. Examples of the indene resins include coumarone-indene resins that contain coumarone and indene as monomer components and coumarone-indene-styrene resins that contain coumarone, indene, and styrene as monomer components. Each of these indene resins may be used alone, or two or more of these may be used in combination.

The term "terpene resins" refers to resins that contain a terpene compound, such as α-pinene, β-pinene, limonene, or dipentene, as a monomer component with the highest content, and may include hydrogenated or modified products thereof. Specific examples of the terpene resins include polyterpene resins containing only one or more of the terpene compounds as monomer components; aromatic modified terpene resins containing the terpene compound and an aromatic compound as monomer components; and terpene phenolic resins containing the terpene compound and a phenolic compound as monomer components. Examples of the aromatic compound as a monomer component of the aromatic modified terpene resins include styrene, α-methylstyrene, vinyl toluene, and divinyl toluene. Examples of the phenolic compound as a monomer component of the terpene phenolic resins include phenol, bisphenol A, cresol, and xylenol. Each of these terpene resins may be used alone, or two or more of these may be used in combination.

The term "rosin resins" refers to resins that contain a rosin acid compound, such as abietic acid, neoabietic acid, palustric acid, or isopimaric acid, and may include hydrogenated or modified products thereof. Non-limiting examples of the rosin resins include natural resin rosins and modified rosin resins obtained by modifying natural resin rosins by hydrogenation, disproportionation, dimerization, esterification, or other modification techniques. Each of these rosin resins may be used alone, or two or more of these may be used in combination.

The term "phenolic resins" refers to resins that contain a phenolic compound, such as phenol or cresol, as a monomer component with the highest content. Non-limiting examples of the phenolic resins include phenol formaldehyde resins, alkyl phenol formaldehyde resins, alkyl phenol acetylene resins, and oil-modified phenol formaldehyde resins. Each of these phenolic resins may be used alone, or two or more of these may be used in combination.

The resins may be modified resins (functionalized resins) in which a functional group has been introduced.

Modified resins can be produced by known methods, such as a slurry method or a metathesis method. Specifically, a modified resin can be produced by reacting a polymer to constitute a polymer skeleton of the modified resin with a functional compound capable of introducing a functional group by a known method.

Non-limiting examples of the polymer to constitute a polymer skeleton include the C5 resins, aromatic resins, and terpene resins described above and other resins. Each of these may be used alone, or two or more of these may be used in combination. Of these, aromatic resins are preferred, α-methylstyrene resins are more preferred, and styrene-α-methylstyrene resins (copolymers of styrene and α-methylstyrene) are still more preferred.

The functional group is preferably a functional group containing at least one element selected from the group consisting of oxygen, silicon, and nitrogen, more preferably a functional group containing silicon.

Usable commercial products of the resin include products available from Maruzen Petrochemical Co., Ltd.

Sumitomo Bakelite Co. Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., and other manufacturers.

The amount of resins (total amount of resins that are solid under conditions of 1 atmosphere and 25°C and resins that are liquid under conditions of 1 atmosphere and 25°C), if present, in the tire rubber composition per 100 parts by mass of the rubber component is preferably 10 parts by mass or more, more preferably 30 parts by mass or more, still more preferably 40 parts by mass or more, while it is preferably 70 parts by mass or less, more preferably 60 parts by mass or less, still more preferably 50 parts by mass or less. When the amount is within the range indicated above, the advantageous effects tend to be better achieved.

To improve grip performance, the amount is preferably 10 parts by mass or more, more preferably 20 parts by mass or more, still more preferably 30 parts by mass or more, further preferably 40 parts by mass or more, further preferably 50 parts by mass or more. To improve fuel economy, the amount is preferably 50 parts by mass or less, more preferably 40 parts by mass or less, still more preferably 30 parts by mass or less, further preferably 20 parts by mass or less, further preferably 10 parts by mass or less.

The amount of resins that are solid under conditions of 1 atmosphere and 25°C, if present, in the tire rubber composition per 100 parts by mass of the rubber component is preferably 10 parts by mass or more, more preferably 20 parts by mass or more, still more preferably 30 parts by mass or more, further preferably 40 parts by mass or more, while it is preferably 70 parts by mass or less, more preferably 60 parts by mass or less, still more preferably 50 parts by mass or less. When the amount is within the range indicated above, the advantageous effects tend to be better achieved.

The amount of resins that are liquid under conditions of 1 atmosphere and 25°C, if present, in the tire rubber composition per 100 parts by mass of the rubber component is preferably 10 parts by mass or more, more preferably 30 parts by mass or more, still more preferably 40 parts by mass or more, while it is preferably 70 parts by mass or less, more preferably 60 parts by mass or less, still more preferably 50 parts by mass or less. When the amount is within the range indicated above, the advantageous effects tend to be better achieved.

The amount of liquid resins includes the amounts of resins contained in resin-extended rubbers.

The tire rubber composition may contain a plasticizer other than the above-described resins.

Herein, the term "plasticizer" refers to a material that imparts plasticity to rubber components and conceptually includes both plasticizers that are liquid under conditions of 1 atmosphere and 25°C and plasticizers that are solid under conditions of 1 atmosphere and 25°C. Examples of the plasticizer other than the resins include oils, liquid rubbers, and ester plasticizers. Liquid rubbers are preferred among these.

These plasticizers may be derived from mineral resources such as petroleum or natural gas, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Examples of the oils include mineral oils, plant oils, and animal oils. In view of life cycle assessment, oils obtained by purifying waste oils used in rubber mixing machines or engines or waste cooking oils used in cooking establishments may be used.

Herein, mineral oils refer to oils derived from mineral resources such as petroleum or natural gas. Examples of the mineral oils include paraffinic oils (mineral oils), naphthenic oils, and aromatic oils. Specific examples of the mineral oils include mild extract solvates (MES), distillate aromatic extracts (DAE), treated distillate aromatic extracts (TDAE), treated residual aromatic extracts (TRAE), and residual aromatic extracts (RAE). For environmental protection, oils with a low polycyclic aromatic compound (PCA) content may be used. Examples of the oils with a low PCA content include MES, TDAE, and heavy naphthenic oils.

Herein, examples of the plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of the plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at 25°C. Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at 25°C.

Whether the tire rubber composition contains the acylglycerol may be examined by any method such as $^{1}H$-NMR

analysis. For example, a rubber composition containing triacylglycerol is immersed in deuterium chloroform at 25°C for 24 hours. After removing the rubber composition, the $^1$H-NMR is measured at room temperature. Signals observed at around 5.26 ppm, around 4.28 ppm, and around 4.15 ppm, each relative to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of ± 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, or other techniques to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, and other manufacturers.

The liquid rubber may be at least one diene-based (co)polymer selected from the group consisting of polybutadiene, polyisoprene, styrene, farnesene, and derivatives thereof. Specific examples include liquid diene-based polymers, such as liquid styrene-butadiene copolymers (liquid SBR), liquid butadiene polymers (liquid BR), liquid isoprene polymers (liquid IR), liquid styrene-isoprene copolymers (liquid SIR), liquid farnesene polymers, and liquid farnesene-butadiene copolymers. Liquid IR is preferred among these.

The liquid rubber may be modified by a functional group interactive with silica. Alternatively, the chain end(s) and/or the backbone of the liquid rubber may be modified by a functional group including at least one element selected from the group consisting of oxygen, nitrogen, silicon, and phosphorus. The liquid rubber may be either hydrogenated or not hydrogenated.

The amount of the plasticizer (total amount of plasticizers such as resins and liquid rubbers) per 100 parts by mass of the rubber component in the tire rubber composition is preferably 20 parts by mass or more, more preferably 40 parts by mass or more, still more preferably 50 parts by mass or more, further preferably 60 parts by mass or more, while it is preferably 110 parts by mass or less, more preferably 90 parts by mass or less, still more preferably 70 parts by mass or less. When the amount is within the range indicated above, the advantageous effects tend to be better achieved.

To improve grip performance, the amount is preferably 33 parts by mass or more, more preferably 40 parts by mass or more, still more preferably 43 parts by mass or more, further preferably 50 parts by mass or more, further preferably 53 parts by mass or more, further preferably 55 parts by mass or more, further preferably 60 parts by mass or more, further preferably 70 parts by mass or more. To improve abrasion resistance, the amount is preferably 70 parts by mass or less, more preferably 60 parts by mass or less, still more preferably 55 parts by mass or less, further preferably 53 parts by mass or less, further preferably 50 parts by mass or less, further preferably 43 parts by mass or less, further preferably 40 parts by mass or less, further preferably 33 parts by mass or less.

The rubber composition preferably satisfies the condition: total styrene content of the rubber component × (amount of plasticizer + amount of silica)/100 > 50.

In this case, the value on the left hand side is preferably 65 or less, more preferably 60 or less, still more preferably 55 or less. When the value is within the range indicated above, the advantageous effects tend to be better achieved.

In this relationship, the total styrene content refers to the amount (unit: % by mass) based on 100% by mass of the rubber component, and the amount of plasticizer and the amount of silica each refer to the amount (unit: parts by mass) per 100 parts by mass of the rubber component.

The amount of solid plasticizers that are solid under conditions of 1 atmosphere and 25°C, if present, in the tire rubber composition per 100 parts by mass of the rubber component is preferably 10 parts by mass or more, more preferably 20 parts by mass or more, still more preferably 30 parts by mass or more, further preferably 40 parts by mass or more, while it is preferably 70 parts by mass or less, more preferably 60 parts by mass or less, still more preferably 50 parts by mass or less. When the amount is within the range indicated above, the advantageous effects tend to be better achieved.

The amount of liquid plasticizers that are liquid under conditions of 1 atmosphere and 25°C, if present, in the tire rubber composition per 100 parts by mass of the rubber component is preferably 10 parts by mass or more, more preferably 15 parts by mass or more, still more preferably 20 parts by mass or more, while it is preferably 50 parts by mass or less, more preferably 40 parts by mass or less, still more preferably 35 parts by mass or less, further preferably 30 parts by mass or less, further preferably 23 parts by mass or less. When the amount is within the range indicated above, the advantageous effects tend to be better achieved.

The amount of liquid plasticizers includes the amounts of oils contained in oil-extended rubbers and the amounts of liquid resins contained in resin-extended rubbers that have been extended with the liquid resins.

The amount of liquid rubbers that are liquid under conditions of 1 atmosphere and 25°C, if present, in the tire

rubber composition per 100 parts by mass of the rubber component is preferably 1 part by mass or more, more preferably 5 parts by mass or more, still more preferably 10 parts by mass or more, while it is preferably 30 parts by mass or less, more preferably 20 parts by mass or less, still more preferably 15 parts by mass or less. When the amount is within the range indicated above, the advantageous effects tend to be better achieved.

The amount of oils that are liquid under conditions of 1 atmosphere and 25°C, if present, in the tire rubber composition per 100 parts by mass of the rubber component is preferably 1 part by mass or more, more preferably 5 parts by mass or more, still more preferably 10 parts by mass or more, while it is preferably 30 parts by mass or less, more preferably 25 parts by mass or less, still more preferably 20 parts by mass or less, further preferably 15 parts by mass or less, further preferably 13 parts by mass or less. When the amount is within the range indicated above, the advantageous effects tend to be better achieved.

The amount of oils includes the amounts of oils contained in oil-extended rubbers.

The tire rubber composition may contain a fatty acid derivative.

Examples of the fatty acid derivative include fatty acid metal salts, amide esters, fatty acid esters, fatty acid amides, mixtures of fatty acid metal salts and amide esters, and mixtures of fatty acid metal salts and fatty acid amides. Each of these may be used alone, or two or more of these may be used in combination. Of these, the fatty acid derivative preferably includes at least one selected from the group consisting of a fatty acid metal salt, an amide ester, and a mixture of a fatty acid metal salt and an amide ester or a fatty acid amide, more preferably a fatty acid metal salt or a mixture of a fatty acid metal salt and a fatty acid amide, still more preferably a mixture of a fatty acid metal salt and a fatty acid amide.

Non-limiting examples of the fatty acid constituting the fatty acid metal salts include saturated or unsaturated fatty acids (preferably C6-C28 saturated or unsaturated fatty acids, more preferably C10-C25 saturated or unsaturated fatty acids, still more preferably C14-C20 saturated or unsaturated fatty acids), such as lauric acid, myristic acid, palmitic acid, stearic acid, oleic acid, linoleic acid, linolenic acid, arachidic acid, behenic acid, and nervonic acid. Each of these may be used alone, or mixtures of two or more of these may be used. Of these, saturated fatty acids are preferred, and C14-C20 saturated fatty acids are more preferred.

Examples of the metal constituting the fatty acid metal salts include alkali metals such as potassium and sodium, alkaline earth metals such as magnesium, calcium, and barium, zinc, nickel, and molybdenum. Each of these may be used alone, or two or more of these may be used in combination. Of these, zinc or calcium is preferred.

Examples of the amide esters include fatty acid amide esters containing the saturated or unsaturated fatty acids as constituent components. Each of these may be used alone, or two or more of these may be used in combination.

Examples of the fatty acid esters include fatty acid esters containing the saturated or unsaturated fatty acids as constituent components. Each of these may be used alone, or two or more of these may be used in combination.

The fatty acid amides may be either saturated fatty acid amides or unsaturated fatty acid amides. Each of these may be used alone, or two or more of these may be used in combination. Examples of the saturated fatty acid amides include N-(1-oxooctadecyl) sarcosinamide, stearic acid amide, and behenic acid amide. Examples of the unsaturated fatty acid amides include oleic acid amide and erucic acid amide.

Specific examples of the mixtures of fatty acid metal salts and amide esters include Aflux16, which is a mixture of a fatty acid calcium salt and an amide ester, available from Rhein Chemie.

Specific examples of the mixtures of fatty acid metal salts and fatty acid amides include WB16, which is a mixture of a fatty acid calcium salt and a fatty acid amide, available from Struktol.

Examples of the fatty acid derivative include products available from Rhein Chemie, Struktol, and other manufactures.

The amount of the fatty acid derivative per 100 parts by mass of the rubber component is preferably 2 parts by mass or more, more preferably 4 parts by mass or more, still more preferably 6 parts by mass or more, while it is preferably 20 parts by mass or less, more preferably 15 parts by mass or less, still more preferably 10 parts by mass or less. When the amount is within the range indicated above, the advantageous effects tend to be better achieved.

The tire rubber composition may contain vulcanized rubber particles.

The term "vulcanized rubber particles" refers to particles made of vulcanized rubber. Examples of usable vulcanized rubber particles include rubber powder stipulated in JIS K 6316:2017. From the perspective of environmental considerations and cost, recycled rubber powder produced from pulverized waste tires or the like is preferred. Each of these may be used alone, or two or more of these may be used in combination.

The vulcanized rubber particles are not limited and may be unmodified vulcanized rubber particles or modified vulcanized rubber particles.

Usable commercial products of vulcanized rubber particles may be available from Lehigh, Muraoka Rubber Reclaiming Co., Ltd, and other manufacturers.

The amount of vulcanized rubber particles per 100 parts by mass of the rubber component in the tire rubber composition is preferably 1 part by mass or more, more preferably 3 parts by mass or more, still more preferably 5 parts by mass or more, while it is preferably 30 parts by mass or less, more preferably 20 parts by mass or less, still more preferably 15 parts by mass or less. When the amount is within the range indicated above, the advantageous effects tend to be better

achieved.

In view of crack resistance, ozone resistance, or the like, the tire rubber composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl) propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products may be available from Seiko Chemical Co., Ltd., Sumitomo Chemical Co., Ltd., Ouchi Shinko Chemical Industrial Co., Ltd., Flexsys, and other manufacturers.

The amount of the antioxidant per 100 parts by mass of the rubber component in the tire rubber composition is preferably 2.0 parts by mass or more, more preferably 4.5 parts by mass or more. The amount is preferably 10 parts by mass or less, more preferably 6 parts by mass or less. When the amount is within the range indicated above, the advantageous effects tend to be better achieved.

The tire rubber composition may contain stearic acid.

The amount of the stearic acid per 100 parts by mass of the rubber component in the tire rubber composition is preferably 1.0 parts by mass or more, more preferably 2.0 parts by mass or more, while it is preferably 10 parts by mass or less, more preferably 5 parts by mass or less. When the amount is within the range indicated above, the advantageous effects tend to be better achieved.

Here, conventionally known stearic acid may be used, including, for example, those available from NOF Corporation, Kao Corporation, FUJIFILM Wako Pure Chemical Corporation, Chiba Fatty Acid Co., Ltd., and other manufacturers.

The tire rubber composition may contain zinc oxide.

The amount of the zinc oxide per 100 parts by mass of the rubber component in the tire rubber composition is preferably 1.0 parts by mass or more, more preferably 2.0 parts by mass or more, while it is preferably 10 parts by mass or less, more preferably 5 parts by mass or less. When the amount is within the range indicated above, the advantageous effects tend to be better achieved.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., and other manufacturers.

The tire rubber composition may contain sulfur.

The amount of the sulfur per 100 parts by mass of the rubber component in the tire rubber composition is preferably 0.5 parts by mass or more, more preferably 1.0 parts by mass or more, still more preferably 1.2 parts by mass or more, while it is preferably 3.5 parts by mass or less, more preferably 3.0 parts by mass or less, still more preferably 2.5 parts by mass or less. When the amount is within the range indicated above, the advantageous effects tend to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products may be available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd, and other manufacturers. Each of these may be used alone, or two or more of these may be used in combination.

The tire rubber composition may contain a vulcanization accelerator.

The amount of the vulcanization accelerator in the tire rubber composition is not limited and may be freely determined according to the desired curing rate and crosslink density. Still, the amount per 100 parts by mass of the rubber component is preferably 1 part by mass or more, more preferably 3 parts by mass or more, still more preferably 5 parts by mass or more, while it is preferably 15 parts by mass or less, more preferably 10 parts by mass or less.

Any type of vulcanization accelerators may be used, including those generally used. Examples of the vulcanization accelerator include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial

products may be available from Sumitomo Chemical Co., Ltd., Ouchi Shinko Chemical Industrial Co., Ltd., and other manufacturers. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the tire rubber composition may appropriately contain agents commonly used in the tire industry such as releasing agents or other materials.

Herein, various materials containing carbon atoms (for example, rubbers, oils, resins, vulcanization accelerators, antioxidants, surfactants) may be derived from carbon dioxide in the air. Such materials may be obtained from carbon dioxide by directly converting carbon dioxide or by synthesizing methane from carbon dioxide through methanation and then converting the methane.

The tire rubber composition can be produced by, for example, kneading the above-described components using a rubber kneading machine such as an open roll mill or a Banbury mixer, and vulcanizing the kneaded mixture.

The kneading conditions are as follows. In a base kneading step of kneading additives other than cross-linking agents (vulcanizing agents) and vulcanization accelerators, the kneading temperature is preferably 100°C or higher, more preferably 120°C or higher, while it is preferably 180°C or lower, more preferably 170°C or lower. In a final kneading step of kneading vulcanizing agents and vulcanization accelerators, the kneading temperature is preferably 80°C or higher, while it is preferably 120°C or lower, more preferably 110°C or lower. The composition obtained after kneading vulcanizing agents and vulcanization accelerators is usually vulcanized by press vulcanization, for example. The vulcanization temperature is preferably 140°C or higher, more preferably 150°C or higher, while it is preferably 190°C or lower, more preferably 185°C or lower.

A tire including a tread that includes the tire rubber composition is produced using the tire rubber composition by a usual method. Specifically, the rubber composition containing necessary additives before vulcanization is extruded and processed into the shape of a tread and then molded on a tire building machine by a usual method. The molded tread is assembled with other tire components to form an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire is usable as a passenger car tire, a large passenger car tire, a large SUV tire, a heavy duty tire such as a truck or bus tire, a light truck tire, a motorcycle tire, a racing tire, a winter tire (studless tire, snow tire, studded tire), an all-season tire, a run-flat tire, an aircraft tire, a mining vehicle tire, or other tires.

The tread of the tire includes a first land portion closest to the tire equator among land portions present in an area on a vehicle outboard side from the tire equator and a second land portion disposed outwardly of the first land portion. Herein, the term "vehicle outboard side" refers to a side farther from the central part of a vehicle when the tire is mounted on the vehicle.

In the tire with no groove on its equator, the "first land portion closest to a tire equator among land portions present in an area on a vehicle outboard side from the equator" refers to a land portion having a contact patch at least in an area on the vehicle outboard side from the equator. Examples of such a land portion include a land portion extending over the equator and a land portion extending on the vehicle outboard side from the equator, with its inner boundary defined by the equator. In the tire with a main groove on its equator, the first land portion refers to a land portion closest to the tire equator in an area on the vehicle outboard side from the tire equator.

The "second land portion disposed outwardly of the first land portion" refers to a land portion that is located outwardly (on the vehicle outboard side) of the first land portion in the tire axis direction andhas the greatest width among the land portions located outwardly of the first land portion. When a plurality of such land portions exist, the second land portion refers to one closest to a ground contact edge on the vehicle outboard side.

The "land ratio L1 of a first land portion closest to a tire equator among land portions present in an area on a vehicle outboard side from the equator" and the "land ratio L2 of a second land portion disposed outwardly of the first land portion" respectively refer to the land ratio of "a first land portion closest to a tire equator among land portions present in an area on a vehicle outboard side from the equator" specified by the above definition and the width of "a second land portion disposed outwardly of the first land portion" specified by the above definition.

Herein, the term "land portion" refers to a portion to come into contact with the road surface among regions between two main grooves or regions between one main groove and a ground contact edge in the tire width direction.

Herein, the term "main groove" refers to a groove having a cross-sectional area of 10 $mm^2$ or more in a direction perpendicular to the tire circumferential direction among grooves continuously extending in the tire circumferential direction. The main groove may be in the form of a straight line parallel to the tire circumferential direction, in the form of a wave, or in the form of a straight line bent multiple times (zig-zag form).

The tire of the present invention has at least two land portions in an area on the vehicle outboard side from the tire equator and thus has at least one main groove located outwardly of the tire equator.

Land portions on the vehicle outboard side from the tire equator largely contribute to the dry grip performance

during cornering, which corresponds to an advantageous effect of the present invention. Therefore, the tire may have any pattern on the vehicle inboard side from the tire equator. Preferably, land portions of the tread on the vehicle inboard side from the tire equator in the tire satisfy the above-described relationships. In other words, the conditions (2) and (3) satisfied even when the tire is mounted with its vehicle inboard and outboard sides reversed on a vehicle.

FIG. 1 is a development diagram of a tread portion according to an embodiment of the tire. In FIG. 1, the right side is the outer side (vehicle outboard side) in the tire axis direction, and the left side is the inner side (vehicle inboard side) in the tire axis direction.

The tread portion has at least two main grooves. In this embodiment, the tread portion has three main grooves 2 as shown in FIG. 1. The main grooves 2 include a main groove 2B extending over the tire equator C and main grooves 2A and 2C respectively extending on the opposing outer sides of the main groove 2B. The main grooves 2 continuously and linearly extend in the tire circumferential direction.

The main grooves 2 divide a land portion 1 of the tread portion into four, specifically, 1A to 1D. In FIG. 1, the land portion 1C located on the vehicle outboard side of the main groove 2B extending over the tire equator C corresponds to "a first land portion closest to a tire equator among land portions present in an area on a vehicle outboard side from the equator", and the land portion 1D disposed outwardly of the main groove 2C in the tire axis direction corresponds to "a second land portion disposed outwardly of the first land portion".

Herein, when the tire is a pneumatic tire, the land ratio is calculated from a contact patch obtained under the conditions of a normal rim, a normal internal pressure, and a normal load. When the tire is a non-pneumatic tire, the land ratio can be calculated as described above without a normal internal pressure.

The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

The term "normal load" refers to a load specified for each tire by the standard in a standard system including standards according to which the tire is provided and is a maximum mass which is allowed to impose on tires. The normal load may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following expressions.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume ($mm^3$) of tire
Dt: outer diameter (mm) of tire
Ht: cross-sectional height (mm) of tire
Wt: cross-sectional width (mm) of tire

The contact patch may be determined by mounting the tire on a normal rim, applying a normal internal pressure to the tire, allowing the tire to stand at 25°C for 24 hours, applying black ink to the tread surface of the tire, and pressing the tread surface against a cardboard at a normal load (camber angle: 0°) for transfer to the cardboard. The transfer is performed at five positions of the tire while rotating the tire by 72° each in the circumferential direction. Namely, the contact

patch is obtained five times. Here, in each of the five contact patches, portions interrupted by the grooves in the contour are smoothly connected, and the resulting shape is determined as a virtual ground contact face.

The land ratio in the entire tread is calculated by the expression: (Average of the areas of five contact patches (parts with black ink) transferred to cardboard)/(Average of the areas of virtual ground contact faces obtained from the five contact patches) × 100 (%).

The L1 and L2 can be calculated as in the calculation of the land ratio in the entire tread, using the average of the areas of parts with black ink respectively corresponding to the first land portion and the second land portion in the five contact patches transferred to the cardboard and the areas of virtual ground contact faces corresponding to the land portions.

In the tire, the land ratio in the entire tread is preferably 55% or higher, more preferably 65% or higher, still more preferably 75% or higher, while it is preferably 90% or lower, more preferably 85% or lower, still more preferably 80% or lower, further preferably 78% or lower. When the land ratio is within the range indicated above, the advantageous effects tend to be better achieved.

In the tire, the land ratio L1 of the first land portion closest to the tire equator among land portions present in an area on the vehicle outboard side from the equator is preferably 65% or higher, more preferably 75% or higher, still more preferably 85% or higher, while it is preferably 95% or lower, more preferably 90% or lower. When the land ratio L1 is within the range indicated above, the advantageous effects tend to be better achieved.

In the tire, the land ratio L2 of the second land portion disposed outwardly of the first land portion is preferably 65% or higher, more preferably 75% or higher, still more preferably 85% or higher, while it is preferably 95% or lower, more preferably 91% or lower, still more preferably 90% or lower. When the land ratio L2 is within the range indicated above, the advantageous effects tend to be better achieved.

The tire satisfies the condition: $L2/L1 > 0.3$.

The value on the left hand side is preferably 0.5 or more, more preferably 0.8 or more, still more preferably 1.0 or more, while it is preferably 2.0 or less, more preferably 1.5 or less, still more preferably 1.1 or less. When the value is within the range indicated above, the advantageous effects tend to be better achieved.

To improve abrasion resistance, the value is preferably 1.0 or more, more preferably 1.07 or more. To improve ride quality, the value is preferably 1.08 or less, more preferably 1.0 or less.

In this relationship, L1 refers to the land ratio (unit: %) of the first land portion closest to the tire equator among land portions present in an area on the vehicle outboard side from the equator, and L2 refers to the land ratio (unit: %) of the second land portion disposed outwardly of the first land portion.

The tire satisfies the condition: $(L2 - L1 \times 0.3) \times$ total styrene content of the rubber component > 500.

The value on the left hand side is preferably 600 or more, more preferably 700 or more, still more preferably 800 or more, while it is preferably 2000 or less, more preferably 1500 or less, still more preferably 1000 or less. When the value is within the range indicated above, the advantageous effects tend to be better achieved.

To improve grip performance, the value is preferably 818.125 or more, more preferably 1175.125 or more, still more preferably 1552.35 or more. To improve fuel economy, the value is preferably 1552.35 or less, more preferably 1175.125 or less, still more preferably 818.125 or less.

In this relationship, L1 refers to the land ratio (unit: %) of the first land portion closest to the tire equator among land portions present in an area on the vehicle outboard side from the equator, L2 refers to the land ratio (unit: %) of the second land portion disposed outwardly of the first land portion, and the total styrene content refers to the amount (unit: % by mass) based on 100% by mass of the rubber component.

The tire preferably satisfies the condition: $(L2 - L1 \times 0.3) \times$ amount of plasticizer/100 > 25.

In this case, the value on the left hand side is preferably 29 or more, more preferably 32 or more, still more preferably 35 or more, while it is preferably 50 or less, more preferably 45 or less, still more preferably 40 or less. When the value is within the range indicated above, the advantageous effects are better achieved, though the mechanism thereof is not clear. Presumably, the conformity to the road surface is increased, thereby enabling driving with enhanced road traction during cornering. Thus, the dry grip performance during cornering is assumed to improve significantly.

To improve grip performance, the value is preferably 28.165 or more, more preferably 29.75 or more, still more preferably 32.725 or more, further preferably 34.715 or more, further preferably 35.7 or more, further preferably 41.65 or more. To improve abrasion resistance, the value is preferably 41.65 or less, more preferably 35.7 or less, still more preferably 34.715 or less, further preferably 32.725 or less, further preferably 29.75 or less, further preferably 28.165 or less.

In this relationship, L1 refers to the land ratio (unit: %) of the first land portion closest to the tire equator among land portions present in an area on the vehicle outboard side from the equator, L2 refers to the land ratio (unit: %) of the second land portion disposed outwardly of the first land portion, and the amount of plasticizer refers to the amount (unit: parts by mass) per 100 parts by mass of the rubber component.

The tire preferably satisfies the condition: land ratio in the entire tread × CTAB specific surface area of silica/100 > 150.

In this case, the value on the left hand side is preferably 160 or more, more preferably 170 or more, still more preferably 180 or more, while it is preferably 250 or less, more preferably 220 or less, still more preferably 200 or less. When the value is within the range indicated above, the advantageous effects tend to be better achieved.

To improve abrasion resistance, the value is preferably 127.5 or more, more preferably 176.475 or more, still more preferably 183.75 or more, further preferably 191.1 or more. To improve fuel economy, the value is preferably 191.1 or less, more preferably 183.75 or less, still more preferably 176.475 or less, further preferably 127.5 or less.

In this relationship, the unit of the land ratio in the entire tread is %, and the unit of the CTAB specific surface area of silica is $m^2/g$.

The tire preferably satisfies the condition: (L2 - L1 $\times$ 0.3) $\times$ amount of ionic bonding coupling agent > 350.

In this case, the value on the left hand side is preferably 370 or more, more preferably 390 or more, still more preferably 393 or more, further preferably 410 or more, further preferably 416 or more, while it is preferably 500 or less, more preferably 460 or less, still more preferably 430 or less. When the value is within the range indicated above, the advantageous effects tend to be better achieved.

In this relationship, L1 refers to the land ratio (unit: %) of the first land portion closest to the tire equator among land portions present in an area on the vehicle outboard side from the equator, L2 refers to the land ratio (unit: %) of the second land portion disposed outwardly of the first land portion, and the amount of ionic bonding coupling agent refers to the amount (unit: parts by mass) per 100 parts by mass of the rubber component.

## EXAMPLES

Examples (working examples) which are considered preferable to implement the present invention are described below although the scope of the invention is not limited to the examples.

Chemicals used in examples and comparative examples are described below.

NR: TSR20
SBR 1: HPR850 (Tg -25°C, styrene content 27.5% by mass, vinyl content 59% by mass) available from JSR Corporation
SBR 2: HPR830E (Tg -23°C, styrene content 39.5% by mass, vinyl content 38.5% by mass, oil content of 10 parts by mass per 100 parts by mass of rubber solid content) available from JSR Corporation
SBR 3: HPR840 (Tg -60°C, styrene content 10% by mass, vinyl content 42% by mass) available from JSR Corporation
BR: BR150B (cis content 95% by mass or higher) available from UBE Corporation
Carbon black: N220 (CTAB specific surface area 111 $m^2/g$)
Silica 1: Ultrasil VN3 (CTAB specific surface area 170 $m^2/g$) available from Evonik
Silica 2: Zeosil Premium SW (CTAB specific surface area 245 $m^2/g$) available from Solvay
Silica 3: Ultrasil 9100GR (CTAB specific surface area 200 $m^2/g$) available from Evonik
Magnesium sulfate: MN-00 (anhydrous magnesium sulfate, median particle size (median size) 75 $\mu$m) available from Umai Chemical Co., Ltd.
Silane coupling agent 1: Si266 (bis(3-triethoxysilylpropyl)disulfide) available from Evonik
Silane coupling agent 2: NXT (3-octanoylthiopropyltriethoxysilane) available from Momentive
Ionic bonding coupling agent 1: X-12-1126 (quaternary ammonium salt, hydrolysate of compound represented by the formula (1), compound represented by the formula (1-1)) available from Shin-Etsu Chemical Co., Ltd.
Ionic bonding coupling agent 2: KBM-9418-40 (quaternary ammonium salt, compound represented by the formula (1)) available from Shin-Etsu Chemical Co., Ltd.
Liquid rubber: LIR-410 (maleic acid-modified liquid polyisoprene, Mw 30000) available from Kuraray Co., Ltd.
Oil 1: A/O Mix available from Sankyo Yuka Kogyo K.K.
Oil 2: Nissin refined soybean oil available from Nisshin Oillio Group
Resin 1: Oppera PR-383 (hydrogenated DCPD/C9 resin) available from Exxon Mobil
Resin 2: Sylvatraxx4401 (copolymer of $\alpha$-methylstyrene and styrene) available from Arizona Chemical
Resin 3: YS resin TO125 (terpene-styrene resin, copolymer of terpene compound and styrene) available from Yasuhara Chemical Co., Ltd.
Wax: Ozoace 0355 available from Nippon Seiro Co., Ltd.
Antioxidant 1: NOCRAC 6C (N-phenyl-N'-(1,3-dimethylbutyl)-p-phenylenediamine) (6PPD) available from Ouchi Shinko Chemical Industrial Co., Ltd.
Antioxidant 2: ANTAGE RD (2,2,4-trimethyl-1,2-dihydroquinoline polymer) available from Kawaguchi Chemical Industry Co., Ltd.
Stearic acid: stearic acid "TSUBAKI" available from NOF corporation
Zinc oxide: zinc oxide #1 available from Mitsui Mining & Smelting Co., Ltd.
Sulfur: HK-200-5 (5 mass% oil-containing powdered sulfur) available from Hosoi Chemical Industry Co., Ltd.

Fatty acid derivative 1: WB16 (mixture of fatty acid metal salt (fatty acid calcium salt, constituent fatty acid: a C14 to C20 saturated fatty acid) and fatty acid amide) available from Struktol
Fatty acid derivative 2: Activator 73A (mixture of zinc salt of aliphatic carboxylic acid and zinc salt of aromatic carboxylic acid) available from Struktol
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (diphenyl guanidine) available from Ouchi Shinko Chemical Industrial Co., Ltd.

<Examples and Comparative Examples>

(Base kneading step)

According to the formulation in Table 1 or 2, materials are introduced into a Banbury mixer and kneaded. After kneading at a rubber temperature of 160°C for two minutes, the kneaded product is discharged.
The discharged mixture (rubber sheet) alone is introduced into a Banbury mixer and further kneaded (discharge temperature 160°C).

(Final kneading step)

The obtained mixture, the sulfur, and the vulcanization accelerators are introduced into a Banbury mixer and kneaded to obtain an unvulcanized rubber composition. The kneading is terminated when the rubber temperature reaches 100°C.

(Vulcanization step)

The unvulcanized rubber composition is molded into a cap tread form and then assembled with other tire components to form an unvulcanized tire. The unvulcanized tire is press-vulcanized at 150°C for 12 minutes to produce a test tire.
The test tire is evaluated as described below. Tables 1 and 2 show the results.
The evaluation references for calculating indices in the following evaluation methods are as follows.

Table 1: Comparative Example 1
Table 2: Comparative Example 4

In the tables, the amount of rubbers in oil-extended rubbers are included in the rubber columns, while the amount in the column of "Oil 1" includes the amounts of oils in oil-extended rubbers.
The tire sizes in Tables 1 and 2 are as follows.

Table 1: 185/65R14
Table 2: 215/65R14

The land ratios in the entire tread, L1, and L2 in Tables 1 and 2 are as follows.

Table 1: land ratio in the entire tread: 75%, L1: 85%, L2: 85%, L2/L1: 1.0
Table 2: land ratio in the entire tread: 78%, L1: 85%, L2: 91%, L2/L1: 1.07

(Dry grip performance during cornering)

A set of the test tires is mounted on all the wheels of a vehicle. The vehicle conducts cornering on a dry road surface of a test course. The driver subjectively evaluates the grip performance during cornering on a 5-point scale of 1 to 5 points. Total 20 drivers perform the test. The total points is calculated and expressed as an index relative to the total points in the evaluation reference taken as 100. A higher index indicates better dry grip performance during cornering.

[Table 1]

| | | Example | | | |
|---|---|---|---|---|---|
| | | 1 | 2 | 3 | 4 |
| Formulation (parts by mass) | NR | 40 | 40 | 40 | 40 |
| | SBR 1 | 0 | 0 | 0 | 0 |
| | SBR 2 | 50 | 50 | 50 | 50 |
| | SBR 3 | 0 | 0 | 0 | 0 |
| | BR | 10 | 10 | 10 | 10 |
| | Carbon black | 5 | 5 | 5 | 5 |
| | Silica 1 | 80 | 80 | 80 | 80 |
| | Silica 2 | 0 | 0 | 0 | 0 |
| | Magnesium sulfate | 0 | 0 | 10 | 10 |
| | Silane coupling agent 1 | 5 | 5 | 5 | 5 |
| | Silane coupling agent 2 | 0 | 0 | 0 | 0 |
| | Ionic bonding coupling agent 1 | 7 | 7 | 7 | 7 |
| | Liquid rubber | 0 | 10 | 0 | 10 |
| | Oil 1 | 30 | 30 | 30 | 30 |
| | Resin 1 | 10 | 10 | 10 | 10 |
| | Resin 2 | 0 | 0 | 0 | 0 |
| | Wax | 2.5 | 2.5 | 2.5 | 2.5 |
| | Antioxidant 1 | 3 | 3 | 3 | 3 |
| | Antioxidant 2 | 1.5 | 1.5 | 1.5 | 1.5 |
| | Stearic acid | 2 | 2 | 2 | 2 |
| | Zinc oxide | 2 | 2 | 2 | 2 |
| | Sulfur | 1.2 | 1.2 | 1.2 | 1.2 |
| | Fatty acid derivative 1 | 3 | 3 | 3 | 3 |
| | Fatty acid derivative 2 | 3 | 3 | 3 | 3 |
| | Vulcanization accelerator 1 | 2.5 | 2.5 | 2.5 | 2.5 |
| | Vulcanization accelerator 2 | 2.5 | 2.5 | 2.5 | 2.5 |
| Total styrene content of rubber component | | 19.75 | 19.75 | 19.75 | 19.75 |
| (L2 - L1 × 0.3) × Total styrene content of rubber component | | 1175.13 | 1175.13 | 1175.13 | 1175.13 |
| Total styrene content of rubber component × (Plasticizer + Silica)/100 | | 47.4 | 51.35 | 47.4 | 51.35 |
| (L2 - L1 × 0.3) × Plasticizer/100 | | 23.8 | 29.75 | 23.8 | 29.75 |
| Land ratio of entire tread × CTAB of silica/100 | | 127.5 | 127.5 | 127.5 | 127.5 |
| (L2 - L1 × 0.3) × Ionic bonding coupling agent | | 416.5 | 416.5 | 416.5 | 416.5 |
| Silica/Total styrene content of rubber component | | 4.05063 | 4.05063 | 4.05063 | 4.05063 |
| Evaluation | Dry grip performance during cornering | 129 | 126 | 132 | 129 |

| | | Example 5 | Example 6 | Example 7 | Example 8 |
|---|---|---|---|---|---|
| Formulation (parts by mass) | NR | 40 | 30 | 30 | 30 |
| | SBR 1 | 50 | 50 | 50 | 50 |
| | SBR 2 | 0 | 0 | 0 | 0 |
| | SBR 3 | 0 | 0 | 0 | 0 |
| | BR | 10 | 20 | 20 | 20 |
| | Carbon black | 5 | 5 | 5 | 5 |
| | Silica 1 | 110 | 0 | 0 | 0 |
| | Silica 2 | 0 | 110 | 110 | 110 |
| | Magnesium sulfate | 10 | 10 | 10 | 10 |
| | Silane coupling agent 1 | 7 | 7 | 7 | 0 |
| | Silane coupling agent 2 | 0 | 0 | 0 | 7 |
| | Ionic bonding coupling agent 1 | 7 | 7 | 7 | 7 |
| | Liquid rubber | 10 | 10 | 10 | 10 |
| | Oil 1 | 25 | 25 | 10 | 10 |
| | Resin 1 | 20 | 20 | 20 | 20 |
| | Resin 2 | 0 | 0 | 20 | 20 |
| | Wax | 2.5 | 2.5 | 2.5 | 2.5 |
| | Antioxidant 1 | 3 | 3 | 3 | 3 |
| | Antioxidant 2 | 1.5 | 1.5 | 1.5 | 1.5 |
| | Stearic acid | 2 | 2 | 2 | 2 |
| | Zinc oxide | 2 | 2 | 2 | 2 |
| | Sulfur | 1.2 | 1.2 | 1.2 | 1.2 |
| | Fatty acid derivative 1 | 3 | 3 | 3 | 3 |
| | Fatty acid derivative 2 | 3 | 3 | 3 | 3 |
| | Vulcanization accelerator 1 | 2.5 | 2.5 | 2.5 | 2.5 |
| | Vulcanization accelerator 2 | 2.5 | 2.5 | 2.5 | 2.5 |
| Total styrene content of rubber component | | 13.75 | 13.75 | 13.75 | 13.75 |
| (L2 - L1 × 0.3) × Total styrene content of rubber component | | 818.125 | 818.125 | 818.125 | 818.125 |
| Total styrene content of rubber component × (Plasticizer + Silica)/100 | | 45.375 | 45.375 | 46.75 | 46.75 |
| (L2 - L1 × 0.3) × Plasticizer/100 | | 32.725 | 32.725 | 35.7 | 35.7 |
| Land ratio of entire tread × CTAB of silica/100 | | 127.5 | 183.75 | 183.75 | 183.75 |
| (L2 - L1 × 0.3) × Ionic bonding coupling agent | | 416.5 | 416.5 | 416.5 | 416.5 |
| Silica/Total styrene content of rubber component | | 8 | 8 | 8 | 8 |
| Evaluation | Dry grip performance during cornering | 148 | 135 | 152 | 139 |

| | | Example | Comparative Example | | |
|---|---|---|---|---|---|
| | | 9 | 1 | 2 | 3 |
| Formulation (parts by mass) | NR | 30 | 40 | 0 | 65 |
| | SBR 1 | 50 | 0 | 0 | 0 |
| | SBR 2 | 0 | 0 | 0 | 15 |
| | SBR 3 | 0 | 50 | 100 | 0 |
| | BR | 20 | 10 | 0 | 20 |
| | Carbon black | 5 | 5 | 5 | 5 |
| | Silica 1 | 0 | 80 | 80 | 80 |
| | Silica 2 | 130 | 0 | 0 | 0 |
| | Magnesium sulfate | 10 | 0 | 0 | 0 |
| | Silane coupling agent 1 | 0 | 5 | 5 | 5 |
| | Silane coupling agent 2 | 9 | 0 | 0 | 0 |
| | Ionic bonding coupling agent 1 | 7 | 7 | 7 | 7 |
| | Liquid rubber | 10 | 0 | 0 | 0 |
| | Oil 1 | 10 | 30 | 30 | 31.5 |
| | Resin 1 | 30 | 10 | 10 | 10 |
| | Resin 2 | 20 | 0 | 0 | 0 |
| | Wax | 2.5 | 2.5 | 2.5 | 2.5 |
| | Antioxidant 1 | 3 | 3 | 3 | 3 |
| | Antioxidant 2 | 1.5 | 1.5 | 1.5 | 1.5 |
| | Stearic acid | 2 | 2 | 2 | 2 |
| | Zinc oxide | 2 | 2 | 2 | 2 |
| | Sulfur | 1.2 | 1.2 | 1.2 | 1.2 |
| | Fatty acid derivative 1 | 3 | 3 | 3 | 3 |
| | Fatty acid derivative 2 | 3 | 3 | 3 | 3 |
| | Vulcanization accelerator 1 | 2.5 | 2.5 | 2.5 | 2.5 |
| | Vulcanization accelerator 2 | 2.5 | 2.5 | 2.5 | 2.5 |
| Total styrene content of rubber component | | 13.75 | 5 | 10 | 5.925 |
| (L2 - L1 × 0.3) × Total styrene content of rubber component | | 818.125 | 297.5 | 595 | 352.538 |
| Total styrene content of rubber component × (Plasticizer + Silica)/100 | | 55 | 12 | 12 | 47.9925 |
| (L2 - L1 × 0.3) × Plasticizer/100 | | 41.65 | 23.8 | 23.8 | 24.6925 |
| Land ratio of entire tread × CTAB of silica/100 | | 183.75 | 127.5 | 127.5 | 127.5 |
| (L2 - L1 × 0.3) × Ionic bonding coupling agent | | 416.5 | 416.5 | 416.5 | 416.5 |
| Silica/Total styrene content of rubber component | | 9.45455 | 16 | 8 | 13.5021 |
| Evaluation | Dry grip performance during cornering | 145 | 100 | 90 | 84 |

[Table 2]

| | | Example | | |
|---|---|---|---|---|
| | | 10 | 11 | 12 |
| Formulation (parts by mass) | NR | 30 | 30 | 30 |
| | SBR 1 | 0 | 0 | 0 |
| | SBR 2 | 60 | 60 | 60 |
| | SBR 3 | 0 | 0 | 0 |
| | BR | 10 | 10 | 10 |
| | Carbon black | 5 | 5 | 5 |
| | Silica 2 | 70 | 120 | 120 |
| | Silica 3 | 50 | 0 | 0 |
| | Magnesium sulfate | 0 | 0 | 5 |
| | Silane coupling agent 1 | 8 | 8 | 8 |
| | Ionic bonding coupling agent 2 | 6 | 6 | 6 |
| | Liquid rubber | 10 | 10 | 10 |
| | Oil 1 | 3 | 3 | 3 |
| | Oil 2 | 10 | 10 | 10 |
| | Resin 1 | 10 | 20 | 20 |
| | Resin 3 | 0 | 0 | 10 |
| | Wax | 2.5 | 2.5 | 2.5 |
| | Antioxidant 1 | 3 | 3 | 3 |
| | Antioxidant 2 | 1.5 | 1.5 | 1.5 |
| | Stearic acid | 2 | 2 | 2 |
| | Zinc oxide | 2 | 2 | 2 |
| | Sulfur | 1.2 | 1.2 | 1.2 |
| | Fatty acid derivative 1 | 3 | 3 | 3 |
| | Fatty acid derivative 2 | 3 | 3 | 3 |
| | Vulcanization accelerator 1 | 2.5 | 2.5 | 2.5 |
| | Vulcanization accelerator 2 | 2.5 | 2.5 | 2.5 |
| Total styrene content of rubber component | | 23.7 | 23.7 | 23.7 |
| (L2 - L1 × 0.3) × Total styrene content of rubber component | | 1552.35 | 1552.35 | 1552.35 |
| Total styrene content of rubber component × (Plasticizer + Silica)/100 | | 36.261 | 38.631 | 41.001 |
| (L2 - L1 × 0.3) × Plasticizer/100 | | 21.615 | 28.165 | 34.715 |
| Land ratio of entire tread × CTAB of silica/100 | | 176.475 | 191.1 | 191.1 |
| (L2 - L1 × 0.3) × Ionic bonding coupling agent | | 393 | 393 | 393 |
| Silica/Total styrene content of rubber component | | 5.063291 | 5.063291 | 5.063291 |
| Evaluation | Dry grip performance during cornering | 120 | 126 | 129 |

| | | Comparative Example |
|---|---|---|
| | | 4 |
| Formulation (parts by mass) | NR | 30 |
| | SBR 1 | 0 |
| | SBR 2 | 0 |
| | SBR 3 | 60 |
| | BR | 10 |
| | Carbon black | 5 |
| | Silica 2 | 70 |
| | Silica 3 | 50 |
| | Magnesium sulfate | 0 |
| | Silane coupling agent 1 | 8 |
| | Ionic bonding coupling agent 2 | 6 |
| | Liquid rubber | 10 |
| | Oil 1 | 0 |
| | Oil 2 | 10 |
| | Resin 1 | 10 |
| | Resin 3 | 0 |
| | Wax | 2.5 |
| | Antioxidant 1 | 3 |
| | Antioxidant 2 | 1.5 |
| | Stearic acid | 2 |
| | Zinc oxide | 2 |
| | Sulfur | 1.2 |
| | Fatty acid derivative 1 | 3 |
| | Fatty acid derivative 2 | 3 |
| | Vulcanization accelerator 1 | 2.5 |
| | Vulcanization accelerator 2 | 2.5 |
| Total styrene content of rubber component | | 6 |
| (L2 - L1 × 0.3) × Total styrene content of rubber component | | 393 |
| Total styrene content of rubber component × (Plasticizer + Silica)/100 | | 9 |
| (L2 - L1 × 0.3) × Plasticizer/100 | | 19.65 |
| Land ratio of entire tread × CTAB of silica/100 | | 176.475 |
| (L2 - L1 × 0.3) × Ionic bonding coupling agent | | 393 |
| Silica/Total styrene content of rubber component | | 20 |
| Evaluation | Dry grip performance during cornering | 100 |

REFERENCE SIGNS LIST

1 land portion

2 main groove
C tire equator

## Claims

**1.** A tire comprising a tread,

the tread comprising a tire rubber composition, the tire rubber composition comprising a rubber component including styrene-butadiene rubber and an ionic bonding coupling agent,
the tread including a first land portion closest to a tire equator among land portions present in an area on a vehicle outboard side from the equator and a second land portion disposed outwardly of the first land portion,
the tire satisfying the following conditions (1) to (3):

(1) the styrene-butadiene rubber has a styrene content of higher than 20% by mass,
(2) a land ratio L1 of the first land portion and a land ratio L2 of the second land portion satisfy $L2/L1 > 0.3$, and
(3) $(L2 - L1 \times 0.3) \times$ total styrene content of the rubber component > 500.

**2.** The tire according to claim 1,
wherein the rubber component further includes an isoprene-based rubber.

**3.** The tire according to claim 1 or 2,
wherein the rubber component further includes polybutadiene rubber.

**4.** The tire according to any one of claims 1 to 3,
wherein the tire rubber composition further contains silica in an amount of 100 parts by mass or more per 100 parts by mass of the rubber component.

**5.** The tire according to any one of claims 1 to 4,
wherein the tire rubber composition further contains silica having a CTAB specific surface area of 220 $m^2/g$ or more.

**6.** The tire according to any one of claims 1 to 5,
wherein the tire rubber composition further contains a plasticizer in an amount of 50 parts by mass or more per 100 parts by mass of the rubber component.

**7.** The tire according to any one of claims 1 to 6,

wherein the tire rubber composition further contains a resin, and
the resin includes at least one selected from the group consisting of a dicyclopentadiene resin, an aromatic vinyl resin, and a terpene resin.

**8.** The tire according to any one of claims 1 to 7,
wherein the tire rubber composition further contains a liquid rubber.

**9.** The tire according to any one of claims 1 to 8,
wherein the tire rubber composition further contains a mercapto silane coupling agent.

**10.** The tire according to any one of claims 1 to 9,
wherein the ionic bonding coupling agent is a quaternary ammonium salt.

**11.** The tire according to any one of claims 1 to 10,

wherein the tire rubber composition satisfies the condition: total styrene content of the rubber component $\times$ (amount of plasticizer + amount of silica)/100 > 50,
preferably satisfies the condition: total styrene content of the rubber component $\times$ (amount of plasticizer + amount of silica)/100 $\leq$ 65,
more preferably satisfies the condition: total styrene content of the rubber component $\times$ (amount of plasticizer + amount of silica)/100 $\leq$ 60,

still more preferably satisfies the condition: total styrene content of the rubber component × (amount of plasticizer + amount of silica)/100 ≤ 55.

**12.** The tire according to any one of claims 1 to 11,

wherein the tire satisfies the condition: (L2 - L1 × 0.3) × amount of plasticizer/100 > 25,
preferably satisfies the condition: (L2 - L1 × 0.3) × amount of plasticizer/100 ≥ 29,
more preferably satisfies the condition: (L2 - L1 × 0.3) × amount of plasticizer/100 ≥ 32,
still more preferably satisfies the condition: (L2 - L1 × 0.3) × amount of plasticizer/100 ≥ 35.

**13.** The tire according to any one of claims 1 to 12,

wherein the tire satisfies the condition: land ratio in entire tread × CTAB specific surface area of silica/100 > 150,
preferably satisfies the condition: land ratio in entire tread × CTAB specific surface area of silica/100 ≥ 160,
more preferably satisfies the condition: land ratio in entire tread × CTAB specific surface area of silica/100 ≥ 170,
still more preferably satisfies the condition: land ratio in entire tread × CTAB specific surface area of silica/100 ≥ 180.

**14.** The tire according to any one of claims 1 to 13,

wherein the tire satisfies the condition: (L2 - L1 × 0.3) × amount of the ionic bonding coupling agent > 350,
preferably the tire satisfies the condition: (L2 - L1 × 0.3) × amount of the ionic bonding coupling agent ≥ 370,
more preferably the tire satisfies the condition: (L2 - L1 × 0.3) × amount of the ionic bonding coupling agent ≥ 390,
still more preferably the tire satisfies the condition: (L2 - L1 × 0.3) × amount of the ionic bonding coupling agent ≥ 410.

**15.** The tire according to any one of claims 1 to 14,

wherein the tire rubber composition satisfies the condition: amount of silica/total styrene content of the rubber component > 5,
preferably satisfies the condition: amount of silica/total styrene content of the rubber component ≥ 6.0,
more preferably satisfies the condition: amount of silica/total styrene content of the rubber component ≥ 7.0,
still more preferably satisfies the condition: amount of silica/total styrene content of the rubber component ≥ 8.0.

**16.** The tire according to any one of claims 1 to 15,

wherein the styrene-butadiene rubber has a styrene content of 25% by mass or higher and 40% by mass or lower, preferably has a styrene content of 27% by mass or higher and 30% by mass or lower .

**17.** The tire according to any one of claims 1 to 16,

wherein the tire satisfies the condition: 0.8 ≤ L2/L1 ≤ 1.5,
preferably satisfies the condition: 1.0 ≤ L2/L1 ≤ 1.1.

**18.** The tire according to any one of claims 1 to 17,

wherein the tire satisfies the condition: 700 ≤ (L2 - L1 × 0.3) × total styrene content of the rubber component ≤ 1500,
preferably satisfies the condition: 800 ≤ (L2 - L1 × 0.3) × total styrene content of the rubber component ≤ 1000.

FIG. 1

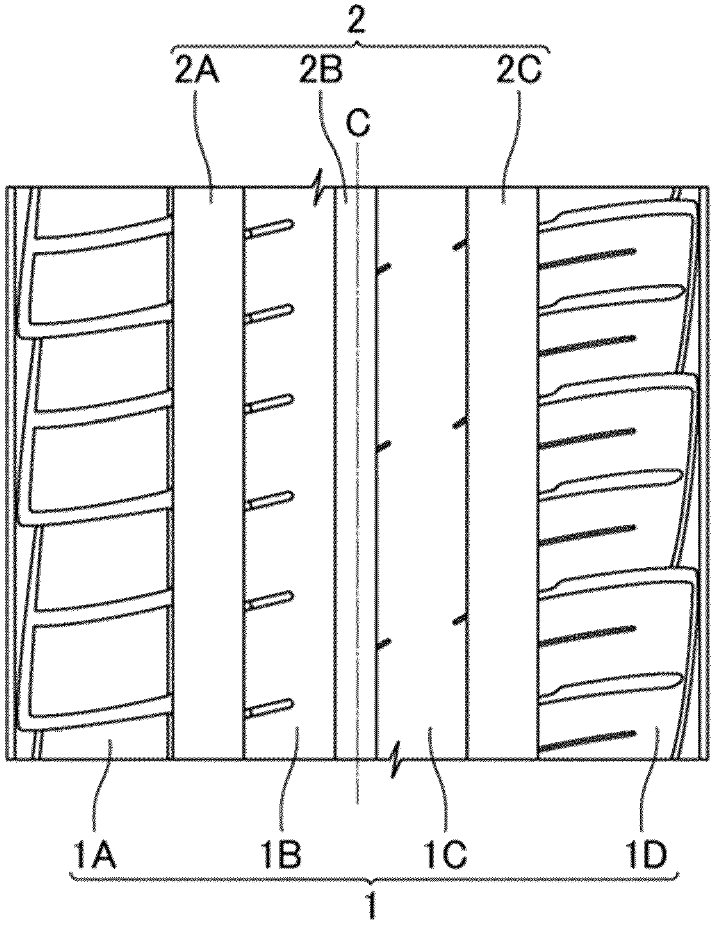

Europäisches Patentamt
European Patent Office
Office européen des brevets

# EUROPEAN SEARCH REPORT

Application Number
EP 25 20 0104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/171323 A1 (SUMITOMO RUBBER IND [JP]) 14 September 2023 (2023-09-14)<br>* claims 1-5; example 10 *<br>----- | 1-18 | INV.<br>B60C1/00<br>C08L9/06 |
| A | JP 2024 089619 A (SUMITOMO RUBBER IND) 3 July 2024 (2024-07-03)<br>* claims 1-3; example A; table 1 *<br>----- | 1-18 | |
| A | EP 3 708 387 A1 (SUMITOMO RUBBER IND [JP]) 16 September 2020 (2020-09-16)<br>* claims 1-9; figures 1-5 *<br>----- | 1-18 | |

TECHNICAL FIELDS SEARCHED (IPC)

B60C
C08L

The present search report has been drawn up for all claims

1

| Place of search | Date of completion of the search | Examiner |
|---|---|---|
| Munich | 12 February 2026 | Höfler, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 20 0104

This annex lists the patent family members relating to the patent documents cited in the above-mentioned European search report. The members are as contained in the European Patent Office EDP file on The European Patent Office is in no way liable for these particulars which are merely given for the purpose of information.

12-02-2026

| Patent document cited in search report | Publication date | Patent family member(s) | Publication date |
|---|---|---|---|
| WO 2023171323 A1 | 14-09-2023 | CN 118043208 A | 14-05-2024 |
| | | DE 112023001252 T5 | 19-12-2024 |
| | | JP 7800217 B2 | 16-01-2026 |
| | | JP 2023130061 A | 20-09-2023 |
| | | US 2025206067 A1 | 26-06-2025 |
| | | WO 2023171323 A1 | 14-09-2023 |
| JP 2024089619 A | 03-07-2024 | NONE | |
| EP 3708387 A1 | 16-09-2020 | CN 111688415 A | 22-09-2020 |
| | | EP 3708387 A1 | 16-09-2020 |
| | | JP 7243324 B2 | 22-03-2023 |
| | | JP 2020147162 A | 17-09-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008285524 A
- JP 2009002594 A


### Non-patent literature cited in the description


- *Akita Prefectural University Web Journal B*, 2019, vol. 6, 216-222
- *JIS K 6217-3*